(19) **Europäisches Patentamt / European Patent Office / Office européen des brevets**

(11) **EP 4 514 037 A1**

(12) **EUROPEAN PATENT APPLICATION**
published in accordance with Art. 153(4) EPC

(43) Date of publication:
**26.02.2025 Bulletin 2025/09**

(21) Application number: **23761412.8**

(22) Date of filing: **21.04.2023**

(51) International Patent Classification (IPC):
**H04W 72/25** (2023.01)    **H04L 5/00** (2006.01)
**H04W 64/00** (2009.01)    **H04B 17/20** (2015.01)
**H04W 24/08** (2009.01)    **H04W 92/18** (2009.01)

(52) Cooperative Patent Classification (CPC):
**H04B 17/20; H04L 5/00; H04W 24/08; H04W 64/00; H04W 72/25; H04W 92/18**

(86) International application number:
**PCT/KR2023/005476**

(87) International publication number:
**WO 2023/204673 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.04.2022 US 202263333515 P**

(71) Applicant: **LG Electronics Inc.**
**Yeongdeungpo-gu**
**Seoul 07336 (KR)**

(72) Inventors:
• **KO, Woosuk**
  **Seoul 06772 (KR)**
• **SEO, Hanbyul**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR PERFORMING WIRELESS COMMUNICATION ON BASIS OF SL PRS**

(57)    Proposed are a method for a first device to perform wireless communication and a device supporting same. For example, the first device may obtain information related with a sidelink (SL) positioning reference signal (PRS) configuration. For example, the first device may receive a first SL PRS. For example, the first device may obtain information related to a first location of the first device, based on the first SL PRS. For example, the first device may receive a second SL PRS. For example, the first device may transmit, based on the first SL PRS and the second SL PRS, information representing whether retransmission of at least one of the first SL PRS and the second SL PRS is required.

FIG. 19

obtain information related with a SL PRS configuration — S1910

receive a first SL PRS — S1920

obtain information related to a first location of the first device, based on the first SL PRS — S1930

receive a second SL PRS — S1940

transmit, based on the first SL PRS and the second SL PRS, information representing whether retransmission of at least one of the first SL PRS and the second SL PRS is required — S1950

**Description**

**TECHNICAL FIELD**

This disclosure relates to a wireless communication system.

**BACKGROUND ART**

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

**DISCLOSURE**

**TECHNICAL SOLUTION**

According to an embodiment of the present disclosure, a method for performing wireless communication by a first device may be provided. For example, the first device may obtain information related with a sidelink (SL) positioning reference signal (PRS) configuration. For example, the first device may receive a first SL PRS. For example, the first device may obtain information related with a first location of the first device, based on the first SL PRS. For example, the first device may receive a second SL PRS. For example, the first device may transmit, based on the first SL PRS and the second SL PRS, information representing whether the retransmission of at least one of the first SL PRS and the second SL PRS is required.

According to an embodiment of the present disclosure, a first device for performing wireless communication may be provided. For example, the first device may include at least one processor; at least one transceiver; and at least one memory connected to the at least one processor and storing instructions that, based on being executed, cause the first device to perform operations. For example, the operations may include: obtaining information related with a sidelink (SL) positioning reference signal (PRS) configuration; For example, the operations may include: receiving a first SL PRS. For example, the operations may include: obtaining information related with a first location of the first device, based on the first SL PRS. For example, the operations may include: receiving a second SL PRS; and/or transmitting, based on the first SL PRS and the second SL PRS, information representing whether the retransmission of at least one of the first SL PRS and the second SL PRS is required.

According to an embodiment of the present disclosure, an apparatus adapted to control a first user equipment (UE) may be provided. For example, the apparatus may comprise: at least one processor; and at least one memory operably connectable to the at least one processor and storing instructions that, based on being executed, cause the first UE to perform operations. For example, the operations may include: obtaining information related with a sidelink (SL) positioning reference signal (PRS) configuration; For example, the operations may include: receiving a first SL PRS. For example, the operations may include: obtaining information related with a first location of the first device, based on the first SL PRS. For example, the operations may include: receiving a second SL PRS; and/or transmitting, based on the first SL PRS and the second SL PRS, information representing whether the retransmission of at least one of the first SL PRS and the second SL PRS is required.

According to an embodiment of the present disclosure, non-transitory computer-readable storage medium storing instructions may be provided. For example, the instructions that, based on being executed by at least one processor, cause a first device to perform operations. For example, the operations may include: obtaining information related with a sidelink (SL) positioning reference signal (PRS) configuration; For example, the operations may include: receiving a first SL PRS. For example, the operations may include: obtaining information related with a first location of the first device, based on the first SL PRS. For example, the operations may include: receiving a second SL PRS; and/or transmitting, based on the first SL PRS and the second SL PRS, information representing whether the retransmission of at least one of the first SL PRS and the second SL PRS is required.

According to an embodiment of the present disclosure, a method for performing wireless communication by a second device may be provided. For example, the second device may obtain information related with a sidelink (SL) positioning reference signal (PRS) configuration. For example, the second device may transmit a first SL PRS. For example, information related with a first location of the first device may be obtained, based on the first SL PRS. For example, the second device may transmit a second SL PRS. For example, the second device may receive, based on the first SL PRS and the second SL PRS, information representing whether the retransmission of at least one of the first SL PRS and the second SL PRS is required.

According to an embodiment of the present disclosure, A second device for performing wireless communication may be provided. For example, the second device may comprise: at least one processor; at least one transceiver; and at least one memory connected to the at least one processor and storing instructions that, based on being executed, cause the second device to perform operations. For example, the operations may include: obtaining information related with a sidelink (SL) positioning reference signal (PRS) configuration. For example, the operations may include: transmitting a first SL PRS. For example, information related with a first location of the first device may be obtained, based on the first SL PRS. For example, the operations may include: transmitting a second SL PRS. For example, the operations may include: receiving, based on the first SL PRS and the second SL PRS, information representing whether the retransmission of at least one of the first SL PRS and the second SL PRS is required.

According to an embodiment of the present disclosure, an apparatus adapted to control a second user equipment (UE) may be provided. For example, the apparatus may comprise: at least one processor; and at least one memory connected to the at least one processor and storing instructions that, based on being executed, cause the second UE to perform operations. For example, the operations may include: obtaining information related with a sidelink (SL) positioning reference signal (PRS) configuration. For example, the operations may include: transmitting a first SL PRS. For example, information related with a first location of the first device may be obtained, based on the first SL PRS. For example, the operations may include: transmitting a second SL PRS. For example, the operations may include: receiving, based on the first SL PRS and the second SL PRS, information representing whether the retransmission of at least one of the first SL PRS and the second SL PRS is required.

According to an embodiment of the present disclosure, non-transitory computer-readable storage medium storing instructions may be proposed. For example, the instructions, based on being executed by one or more processor, cause a second device to perform operations. For example, the operations may include: obtaining information related with a sidelink (SL) positioning reference signal (PRS) configuration. For example, the operations may include: transmitting a first SL PRS. For example, information related with a first location of the first device may be obtained, based on the first SL PRS. For example, the operations may include: transmitting a second SL PRS. For example, the operations may include: receiving, based on the first SL PRS and the second SL PRS, information representing whether the retransmission of at least one of the first SL PRS and the second SL PRS is required.

## BRIEF DESCRIPTION OF THE DRAWINGS

FIG. 1 shows a communication structure that can be provided in a 6G system, based on to an embodiment of the present disclosure.
FIG. 2 shows an electromagnetic spectrum, based on an embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows a synchronization source or synchronization reference of V2X, based on an embodiment of the present disclosure.
FIG. 11 shows an example of an architecture of a 5G system capable of positioning a UE having access to a next generation-radio access network (NG-RAN) or an E-UTRAN based on an embodiment of the present disclosure.
FIG. 12 shows an example of implementing a network for measuring a location of a UE based on an embodiment of the present disclosure.
FIG. 13 shows an example of a protocol layer used to support LTE positioning protocol (LPP) message transmission between an LMF and a UE based on an embodiment of the present disclosure.

FIG. 14 shows an example of a protocol layer used to support NR positioning protocol A (NRPPa) PDU transmission between an LMF and an NG-RAN node based on an embodiment of the present disclosure.

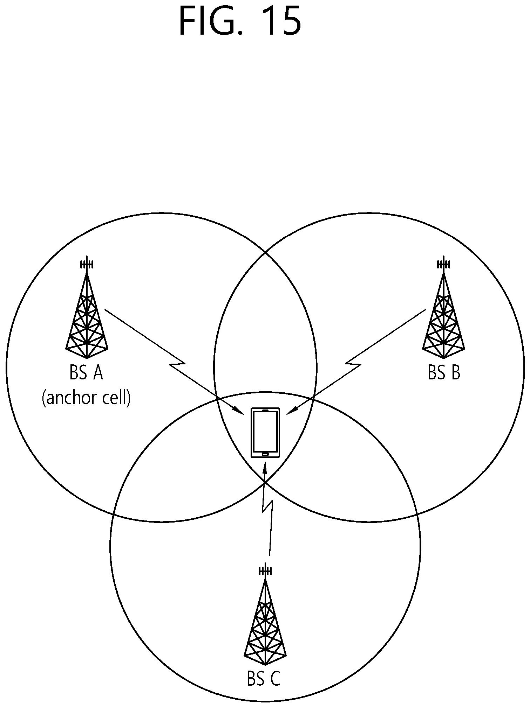

FIG. 15 is a drawing for explaining an OTDOA positioning method based on an embodiment of the present disclosure.

FIG. 16 is a drawing for explaining a problem of a method of performing wireless communication related to SL PRS based on an embodiment of the present disclosure.

FIG. 17 is a drawing for explaining a method of performing wireless communication related to SL PRS based on an embodiment of the present disclosure.

FIG. 18 is a drawing for explaining a procedure for performing wireless communication related to SL PRS based on an embodiment of the present disclosure.

FIG. 19 is a drawing for explaining a method for performing wireless communication by a first device, based on an embodiment of the present disclosure.

FIG. 20 is a drawing for explaining a method for performing wireless communication by a second device, based on an embodiment of the present disclosure.

FIG. 21 shows a communication system 1, based on an embodiment of the present disclosure.

FIG. 22 shows wireless devices, based on an embodiment of the present disclosure.

FIG. 23 shows a signal process circuit for a transmission signal, based on an embodiment of the present disclosure.

FIG. 24 shows another example of a wireless device, based on an embodiment of the present disclosure.

FIG. 25 shows a hand-held device, based on an embodiment of the present disclosure.

FIG. 26 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of 6G system can be four aspects such as intelligent connectivity, deep connectivity, holographic connectivity, and ubiquitous connectivity, and the 6G system can satisfy the requirements as shown in Table 1 below. In other words, Table 1 is an example of the requirements of 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

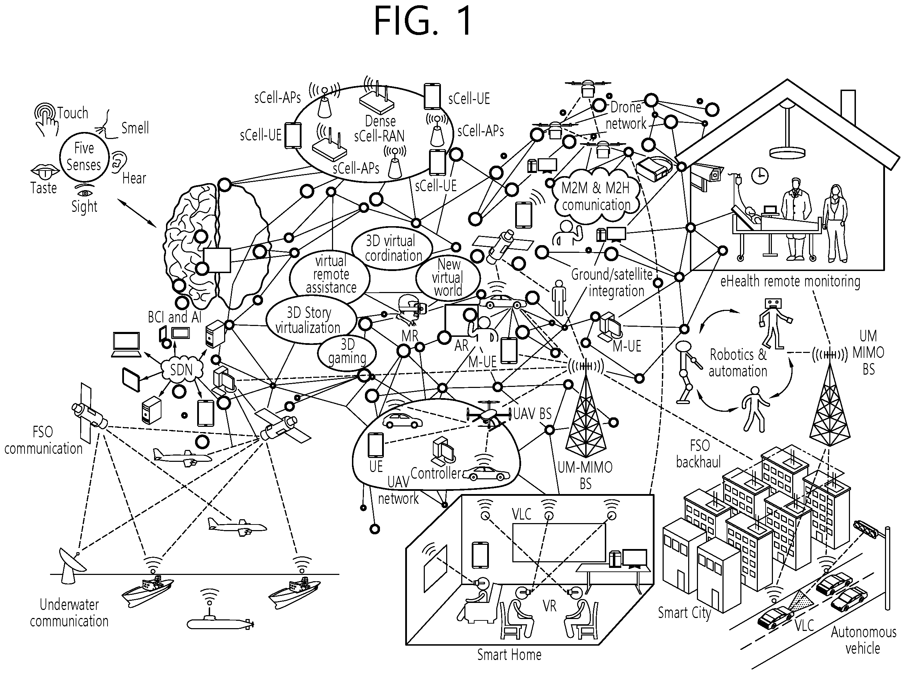

The 6G system may have key factors such as enhanced mobile broadband (eMBB), ultra-reliable low latency communications (URLLC), massive machine-type communication (mMTC), AI integrated communication, Tactile internet, High throughput, High network capacity, High energy efficiency, Low backhaul and access network congestion, Enhanced data security. FIG. 1 shows a communication structure that can be provided in a 6G system, based on to an embodiment of the present disclosure. The embodiment of FIG. 1 may be combined with various embodiments of the present disclosure.

A 6G system is expected to have 50 times higher simultaneous radio connectivity than a 5G radio system. URLLC, a key feature of 5G, will become a more dominant technology in 6G communications by providing end-to-end delay of less than 1 ms. 6G systems will have much better volumetric spectral efficiency as opposed to the more commonly used area spectral efficiency. 6G systems will be able to offer very long battery life and advanced battery technologies for energy harvesting, so mobile devices will not need to be charged separately in a 6G system. New network characteristics in 6G may include the following

- Satellites integrated network: To provide a global mobile aggregation, 6G is expected to be integrated with satellites. The integration of terrestrial, satellite, and airborne networks into a single radio system will be critical for 6G.
- Connected intelligence: Unlike previous generations of wireless communication systems, 6G is revolutionary and will update the wireless evolution from "connected things" to "connected intelligence". AI can be applied at each step of the communication process (or each step of signal processing, as we will see later).
- Seamless integration wireless information and energy transfer: 6G wireless networks will transfer power to charge the batteries of devices such as smartphones and sensors. Therefore, wireless information and energy transfer (WIET) will be integrated.
- Ubiquitous super 3D connectivity: Access to networks and core network functions from drones and very low Earth orbit satellites will make super 3D connectivity ubiquitous in 6G.

From the above new network characteristics of 6G, some common requirements may be as follows

- Small cell networks: The idea of small cell networks was introduced to improve the received signal quality as a result of improved throughput, energy efficiency, and spectral efficiency in cellular systems. As a result, small cell networks are an essential characteristic for 5G and beyond 5G (5GB) communication systems. Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.

- High-capacity backhaul: Backhaul connectivity is characterized by high-capacity backhaul networks to support large volumes of traffic. High-speed fiber optics and free-space optics (FSO) systems can be a possible solution to this problem.
- Radar technology integrated with mobile technology: High-precision localization (or location-based services) over communications is one of the features of 6G wireless communication systems. Therefore, radar systems will be integrated with 6G networks.
- Softwarization and virtualization: Softwarization and virtualization are two important features that are fundamental to the design process in 5GB networks to ensure flexibility, reconfigurability, and programmability. In addition, billions of devices may be shared on a shared physical infrastructure.

Hereinafter, the following describes the key enabling technologies for 6G systems.

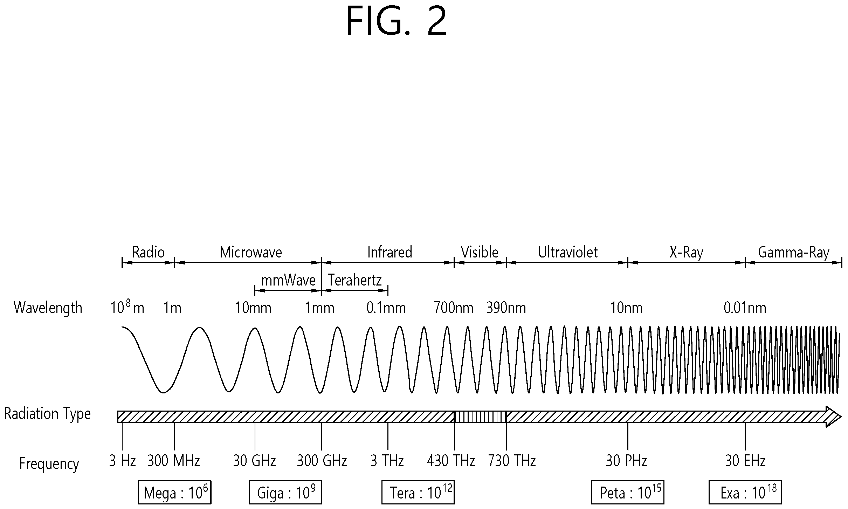

- Artificial Intelligence: The most important and new technology to be introduced in the 6G system is AI. AI was not involved in the 4G system. 5G systems will support partial or very limited AI. However, 6G systems will be AI-enabled for full automation. Advances in machine learning will create more intelligent networks for real-time communication in 6G. The introduction of AI in telecommunications can streamline and improve real-time data transfer. AI can use numerous analytics to determine how complex target tasks are performed. In other words, AI can increase efficiency and reduce processing delays. Time-consuming tasks such as handover, network selection, and resource scheduling can be performed instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): The data rate can be increased by increasing the bandwidth. This can be done by using sub-THz communications with a wide bandwidth and applying advanced massive MIMO techniques. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding to the sub-THz band mmWave band will increase 6G cellular communications capacity. Among the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, based on an embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directional antennas are indispensable. The narrow beamwidth produced by highly directional antennas reduces interference. The small wavelength of THz signals allows a much larger number of antenna elements to be integrated into devices and BSs operating in this band. This enables the use of advanced adaptive array techniques that can overcome range limitations.
- Large-scale MIMO techniques (Large-scale MIMO)
- Hologram beamforming (HBF, Hologram Bmeaforming)
- Optical wireless technology
- Free-space optical transmission backhaul network (FSO Backhaul Network)
- Non-Terrestrial Networks (NTN)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface (Reconfigurable Intelligent Surface)
- Metaverse
- Block-chain
- Unmanned Aerial Vehicle (UAV): Unmanned aerial vehicles (UAVs) or drones will be an important element in 6G wireless communications. In most cases, high-speed data wireless connectivity will be provided using UAV technology. BS entities are installed on UAVs to provide cellular connectivity. UAVs have certain features not found in fixed BS infrastructure, such as easy deployment, strong line-of-sight links, and controlled degrees of freedom for mobility. During emergencies such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.

- Autonomous Driving (Autonomous Driving, Self-driving): In order to achieve complete autonomous driving, vehicles must communicate with each other (vehicle-to-vehicle communication) to inform each other of dangerous situations, or with infrastructures such as parking lots and traffic lights to confirm information such as the location of parking information and signal change times. Vehicle to Everything (V2X), a key element in building an autonomous driving infrastructure, is a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, high transmission speeds and low latency technologies are essential. In addition, in the future, autonomous driving will go beyond delivering warnings and guidance messages to the driver to actively intervene in vehicle operation and directly control the vehicle in dangerous situations, and the amount of information that needs to be transmitted and received will be enormous, so 6G is expected to maximize autonomous driving with faster transmission speeds and lower latency than 5G.

For clarity of description, 5G NR is mainly described, but the technical idea according to an embodiment of the present disclosure is not limited thereto. Various embodiments of the present disclosure may also be applied to a 6G communication system.

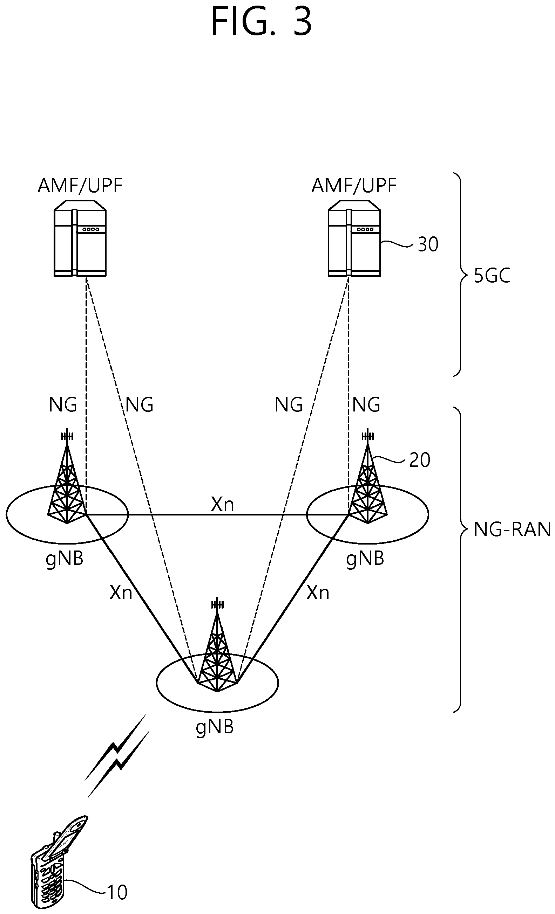

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

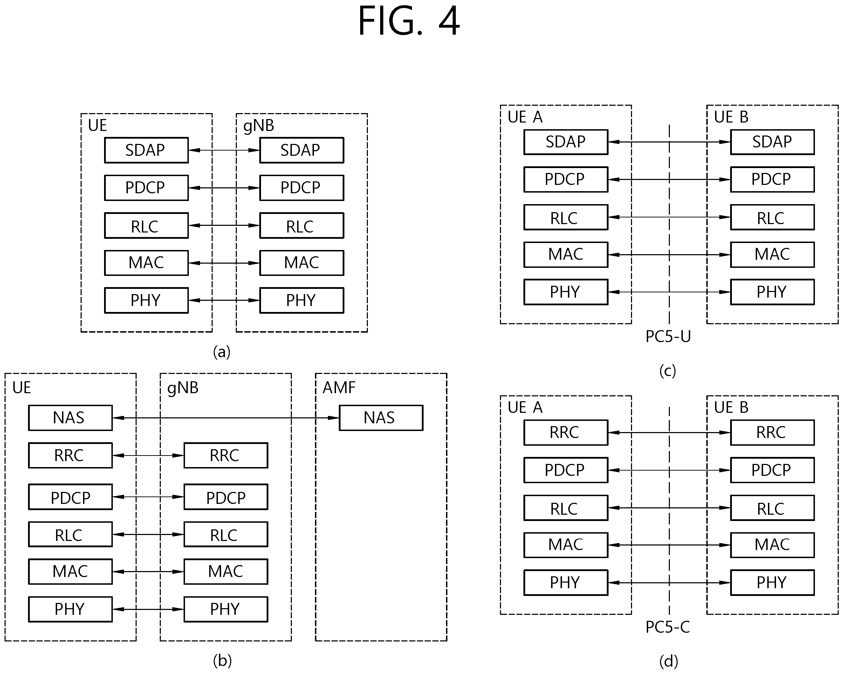

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

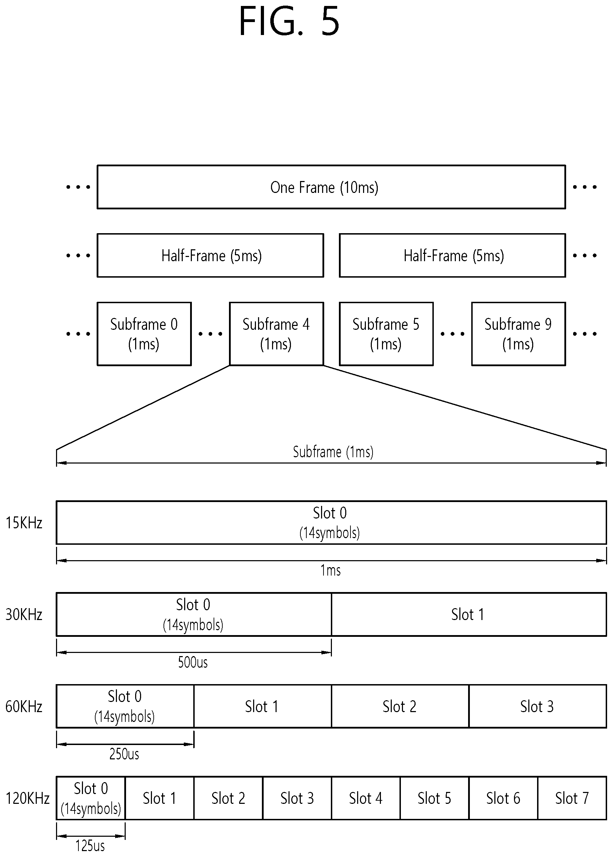

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used and in a case where an extended CP is used.

[Table 2]

| CP type | SCS ($15*2^u$) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells. In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

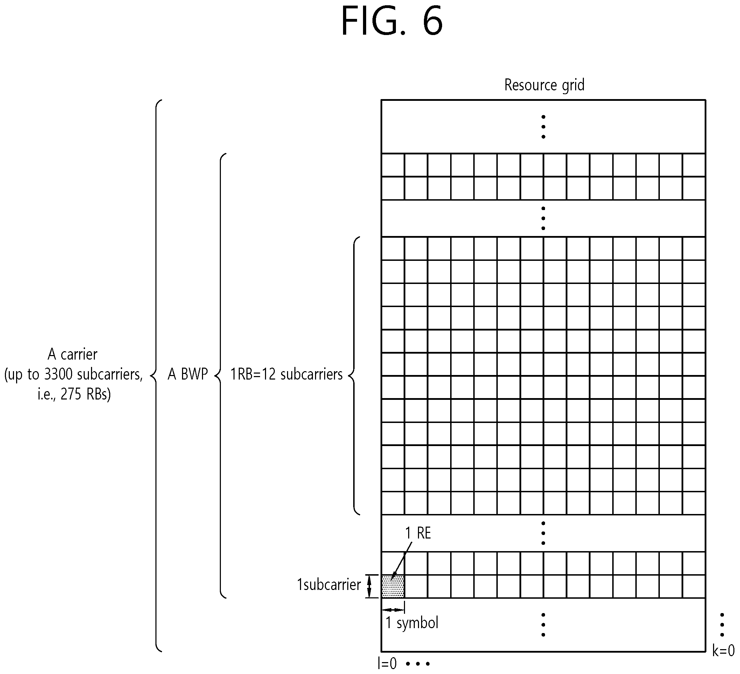

FIG. 6 shows a structure of a slot of an NR frame, based on an embodiment of the present disclosure. The embodiment of FIG. 6 may be combined with various embodiments of the present disclosure. Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

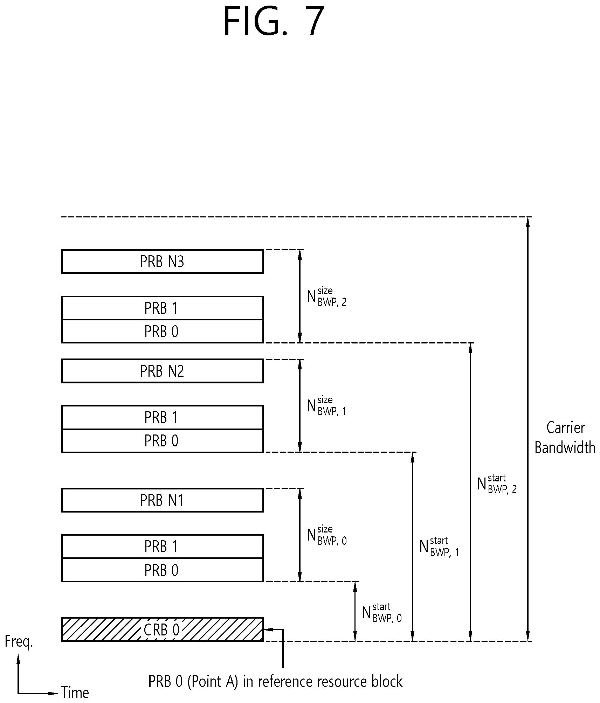

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

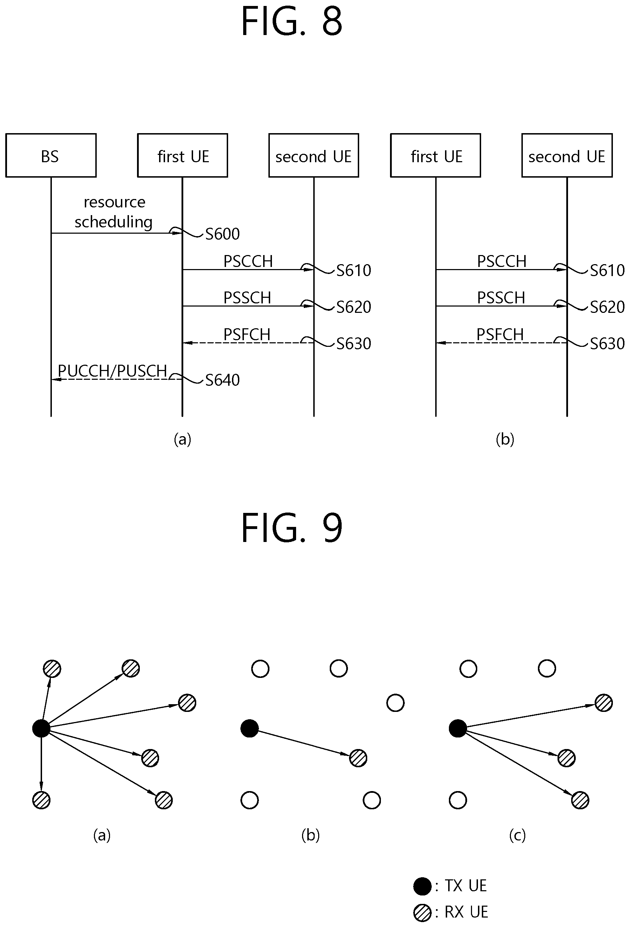

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index - ceiling ($\log_2$ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling ($\log_2(N^{SL}_{subChannel})$) bits
- SCI format 1-A fields: frequency resource assignment, time resource assignment
- PSFCH-to-HARQ feedback timing indicator - ceiling ($\log_2 N_{fb\_timing}$) bits, where $N_{fb\_timing}$ is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described. SCI format 2-A is used for the decoding of PSSCH, with HARQ operation when HARQ-ACK information includes ACK or NACK, when HARQ-ACK information includes only NACK, or when there is no feedback of HARQ-ACK information. The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described. SCI format 2-B is used for the decoding of PSSCH, with HARQ operation when HARQ-ACK information includes only NACK, or when there is no feedback of HARQ-ACK information. The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S630, the first UE may receive the PSFCH. For example, the first UE and the second UE may determine a PSFCH resource, and the second UE may transmit HARQ feedback to the first UE using the PSFCH resource.

Referring to (a) of FIG. 8, in step S640, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, UE procedure for reporting HARQ-ACK on sidelink will be described.

A UE can be indicated by an SCI format scheduling a PSSCH reception, in one or more sub-channels from a number of $N^{PSSCH}_{subch}$ sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot $t'^{SL}_k$ ($0 \leq k < T'_{max}$) has a PSFCH transmission occasion resource if k mod $N^{PSFCH}_{PSSCH}$ = 0, where $t'^{SL}_k$ is a slot that belongs to the resource pool, $T'_{max}$ is a number of slots that belong to the resource pool within 10240 msec, and $N^{PSFCH}_{PSSCH}$ is provided by sl-PSFCH-Period-r16. A UE may be indicated by higher layers to not transmit a PSFCH in response to a PSSCH reception. If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of $M^{PSFCH}_{PRB,set}$ PRBs in a resource pool for PSFCH transmission in a PRB of the resource pool. For a number of $N_{subch}$ sub-channels for the resource pool, provided by sl-NumSubchannel, and a number of PSSCH slots related to a PSFCH slot that is less than or equal to $N^{PSFCH}_{PSSCH}$, the UE allocates the $[(i+j \cdot N^{PSFCH}_{PSSCH}) \cdot M^{PSFCH}_{subch,slot}, (i+1+j \cdot N^{PSFCH}_{PSSCH}) \cdot M^{PSFCH}_{subch,slot}-1]$ PRBs from the $M^{PSFCH}_{PRB,set}$ PRBs to slot i among the PSSCH slots related to the PSFCH slot and sub-channel j, where $M^{PSFCH}_{subch,slot}$ = $M^{PSFCH}_{PRB,set}/(N_{subch} \cdot N^{PSFCH}_{PSSCH})$, $0 \leq i < N^{PSFCH}_{PSSCH}$, $0 \leq j < N_{subch}$, and the allocation starts in an ascending order of i and continues in an ascending order of j. The UE expects that $M^{PSFCH}_{PRB,set}$ is a multiple of $N_{subch} \cdot N^{PSFCH}_{PSSCH}$.

A UE determines a number of PSFCH resources available for multiplexing HARQ-ACK information in a PSFCH transmission as $R^{PSFCH}_{PRB,CS} = N^{PSFCH}_{type} \cdot M^{PSFCH}_{subch,slot} \cdot N^{PSFCH}_{CS}$ where $N^{PSFCH}_{CS}$ is a number of cyclic shift pairs for the resource pool and, based on an indication by higher layers,

- $N^{PSFCH}_{type}$ = 1 and the $M^{PSFCH}_{subch,slot}$ PRBs are related to the starting sub-channel of the corresponding PSSCH
- $N^{PSFCH}_{type}$ = $N^{PSSCH}_{subch}$ and the $N^{PSSCH}_{subch} \cdot M^{PSFCH}_{subch,slot}$ PRBs are related to one or more sub-channels from the $N^{PSSCH}_{subch}$ sub-channels of the corresponding PSSCH

The PSFCH resources are first indexed according to an ascending order of the PRB index, from the $N^{PSFCH}_{type} \cdot M^{PSFCH}_{subch,slot}$ PRBs, and then according to an ascending order of the cyclic shift pair index from the $N^{PSFCH}_{CS}$ cyclic shift pairs.

A UE determines an index of a PSFCH resource for a PSFCH transmission in response to a PSSCH reception as $(P_{ID} + M_{ID})$ mod $R^{PSFCH}_{PRB,CS}$ where $P_{ID}$ is a physical layer source ID provided by SCI format 2-A or 2-B scheduling the PSSCH reception, and $M_{ID}$ is the identity of the UE receiving the PSSCH as indicated by higher layers if the UE detects a SCI format 2-A with Cast type indicator field value of "01"; otherwise, $M_{ID}$ is zero.

A UE determines a $m_0$ value, for computing a value of cyclic shift $\alpha$, from a cyclic shift pair index corresponding to a PSFCH resource index and from $N^{PSFCH}_{CS}$ using Table 8.

[Table 8]

| $N^{PSFCH}_{CS}$ | $m_0$ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a $m_{cs}$ value, for computing a value of cyclic shift $\alpha$, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

[Table 9]

| HARQ-ACK Value | 0 (NACK) | 1 (ACK) |
|---|---|---|
| Sequence cyclic shift | 0 | 6 |

[Table 10]

| HARQ-ACK Value | 0 (NACK) | 1 (ACK) |
|---|---|---|
| Sequence cyclic shift | 0 | N/A |

Hereinafter, the SL synchronization signal (Sidelink Synchronization Signal, SLSS) and synchronization information will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

Hereinafter, synchronization acquisition of a SL UE will be described.

In time division multiple access (TDMA) and frequency division multiple access (FDMA) systems, accurate time and frequency synchronization is essential. If the time and frequency synchronization is not accurate, system performance may be degraded due to inter symbol interference (ISI) and inter carrier interference (ICI). The same is true for V2X. In V2X, for time/frequency synchronization, sidelink synchronization signal (SLSS) may be used in a physical layer, and master information block-sidelink-V2X (MIB-SL-V2X) may be used in a radio link control (RLC) layer.

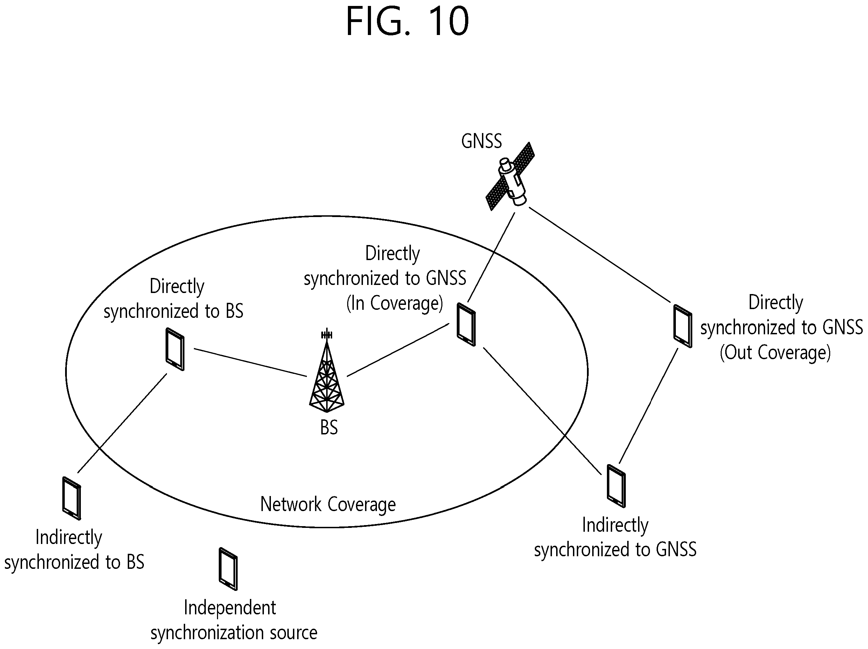

FIG. 10 shows a synchronization source or synchronization reference of V2X, based on an embodiment of the present disclosure. The embodiment of FIG. 10 may be combined with various embodiments of the present disclosure.

Referring to FIG. 8, in V2X, a UE may be directly synchronized with a global navigation satellite system (GNSS), or may be indirectly synchronized with the GNSS through a UE (inside network coverage or outside network coverage) directly synchronized with the GNSS. If the GNSS is configured as the synchronization source, the UE may calculate a DFN and a subframe number by using a coordinated universal time (UTC) and a (pre-)configured direct frame number (DFN) offset.

Alternatively, the UE may be directly synchronized with a BS, or may be synchronized with another UE which is time/frequency-synchronized with the BS. For example, the BS may be an eNB or a gNB. For example, if the UE is inside the network coverage, the UE may receive synchronization information provided by the BS, and may be directly synchronized with the BS. Thereafter, the UE may provide the synchronization information to adjacent another UE. If BS timing is configured based on synchronization, for synchronization and downlink measurement, the UE may be dependent on a cell related to a corresponding frequency (when it is inside the cell coverage at the frequency), or a primary cell or a serving cell (when it is outside the cell coverage at the frequency).

The BS (e.g., serving cell) may provide a synchronization configuration for a carrier used in V2X or SL

**EP 4 514 037 A1**

communication. In this case, the UE may conform to the synchronization configuration received from the BS. If the UE fails to detect any cell in a carrier used in the V2X or SL communication and fails to receive the synchronization configuration from the serving cell, the UE may conform to a pre-configured synchronization configuration.

Alternatively, the UE may be synchronized with another UE which fails to obtain synchronization information directly or indirectly from the BS or the GNSS. A synchronization source or preference may be pre-configured to the UE. Alternatively, the synchronization source and preference may be configured through a control message provided by the BS.

An SL synchronization source may be associated/related with a synchronization priority. For example, a relation between the synchronization source and the synchronization priority may be defined as shown in Table 11 or Table 12. Table 11 or Table 12 are for exemplary purposes only, and the relation between the synchronization source and the synchronization priority may be defined in various forms.

[Table 11]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 12]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | BS | GNSS |
| P4 | All UEs directly synchronized with BS | All UEs directly synchronized with GNSS |
| P5 | All UEs indirectly synchronized with BS | All UEs indirectly synchronized with GNSS |
| P6 | Remaining UE(s) having low priority | Remaining UE(s) having low priority |

In Table 11 or Table 12, P0 may denote a highest priority, and P6 may denote a lowest priority. In Table 11 or Table 12, the BS may include at least one of a gNB and an eNB. Whether to use GNSS-based synchronization or BS-based synchronization may be (pre-)configured. In a single-carrier operation, the UE may derive transmission timing of the UE from an available synchronization reference having the highest priority.

For example, the UE may (re)select a synchronization reference, and the UE may obtain synchronization from the synchronization reference. In addition, the UE may perform SL communication (e.g., PSCCH/PSSCH transmission/-reception, physical sidelink feedback channel (PSFCH) transmission/reception, S-SSB transmission/reception, reference signal transmission/reception, etc.) based on the obtained synchronization.

Hereinafter, positioning will be described.

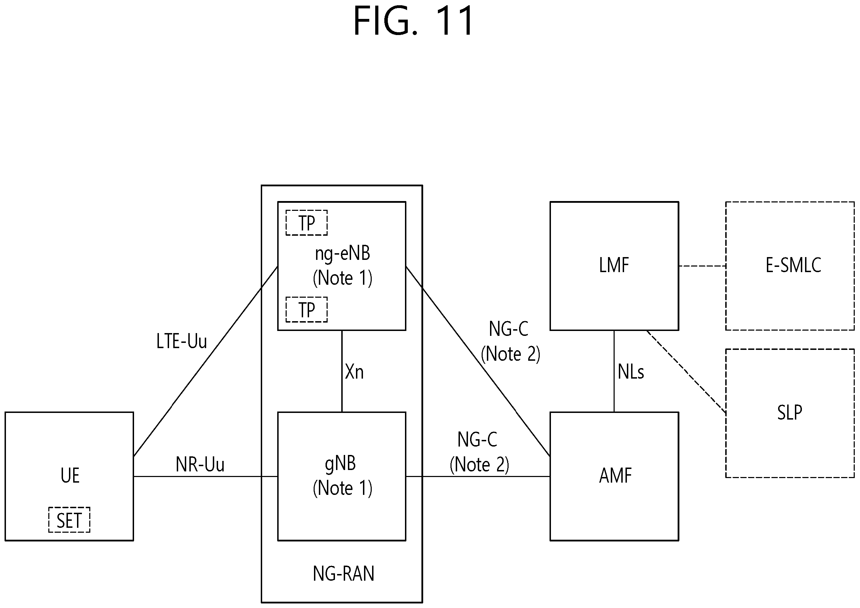

FIG. 11 shows an example of an architecture of a 5G system capable of positioning a UE having access to a next generation-radio access network (NG-RAN) or an E-UTRAN based on an embodiment of the present disclosure. The embodiment of FIG. 11 may be combined with various embodiments of the present disclosure.

Referring to FIG. 11, an AMF may receive a request for a location service related to a specific target UE from a different entity such as a gateway mobile location center (GMLC), or may determine to start the location service in the AMF itself instead of the specific target UE. Then, the AMF may transmit a location service request to a location management function (LMF). Upon receiving the location service request, the LMF may process the location service request and return a processing request including an estimated location or the like of the UE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for location estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location centre (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target UE to obtain location measurement of the UE. For positioning of the target UE, the LMF may determine a positioning method based on a location service (LCS) client type, a requested quality of service (QoS), UE positioning capabilities, gNB positioning capabilities, and ng-eNB positioning capabilities, or the like, and may apply such a positioning method to the serving gNB and/or the serving ng-eNB. In addition, the LMF may determine additional information such as a location estimation value for the target UE and accuracy of location estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, UE barometric pressure sensors or the like. The UE may include an LCS application. The UE may communicate with a network to which the UE has access, or may access the LCS application through another application included in the UE. The LCS application may include a measurement and calculation function required to determine a location of the UE. For example, the UE may include an independent positioning function such as a global positioning system (GPS), and may report the location of the UE independent of NG-RAN transmission. Positioning information obtained independently as such may be utilized as assistance information of the positioning information obtained from the network.

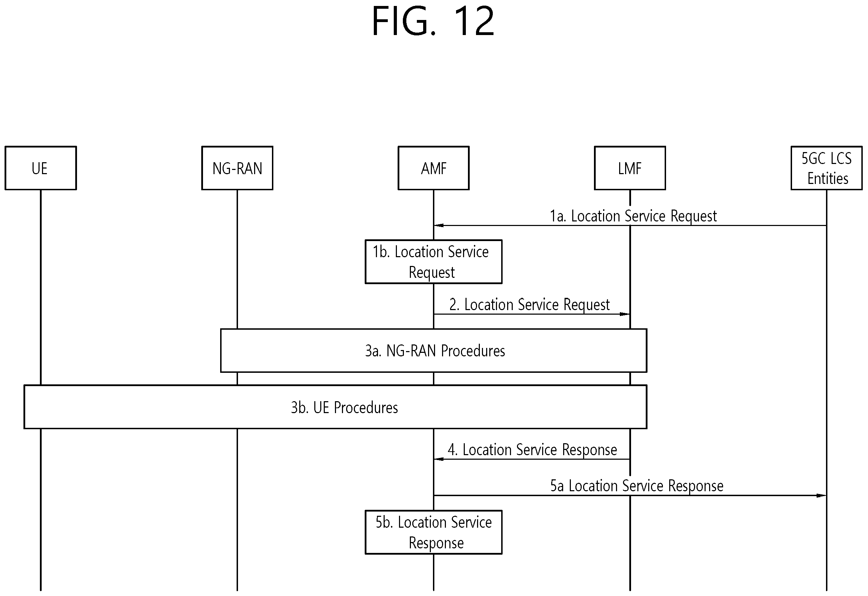

FIG. 12 shows an example of implementing a network for measuring a location of a UE based on an embodiment of the present disclosure. The embodiment of FIG. 12 may be combined with various embodiments of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. 12. That is, it may be assumed in FIG. 12 that the UE is in a connected mode. However, due to signaling and data inactivation or the like, the signaling connection may be released by NG-RAN while a positioning process is performed.

A network operation process for measuring a location of a UE will be described in detail with reference to FIG. 12. In step a1, a 5GC entity such as GMLC may request a serving AMF to provide a location service for measuring a location of a target UE. However, even if the GMLC does not request for the location service, based on step 1b, the serving AMF may determine that the location service for measuring the location of the target UE is required. For example, to measure the location of the UE for an emergency call, the serving AMF may determine to directly perform the location service.

Thereafter, the AMF may transmit the location service request to an LMF based on step 2, and the LMF may start location procedures to obtain location measurement data or location measurement assistance data together with a serving ng-eNB and a serving gNB. Additionally, based on step 3b, the LMF may start location procedures for downlink positioning together with the UE. For example, the LMF may transmit assistance data defined in 3GPP TS 36.355, or may obtain a location estimation value or a location measurement value. Meanwhile, step 3b may be performed additionally after step 3a is performed, or may be performed instead of step 3a.

In step 4, the LMF may provide a location service response to the AMF. In addition, the location service response may include information on whether location estimation of the UE is successful and a location estimation value of the UE. Thereafter, if the procedure of FIG. 12 is initiated by step a1, the AMF may transfer the location service response to a 5GC entity such as GMLC, and if the procedure of FIG. 12 is initiated by step 1b, the AMF may use the location service response to provide a location service related to an emergency call or the like.

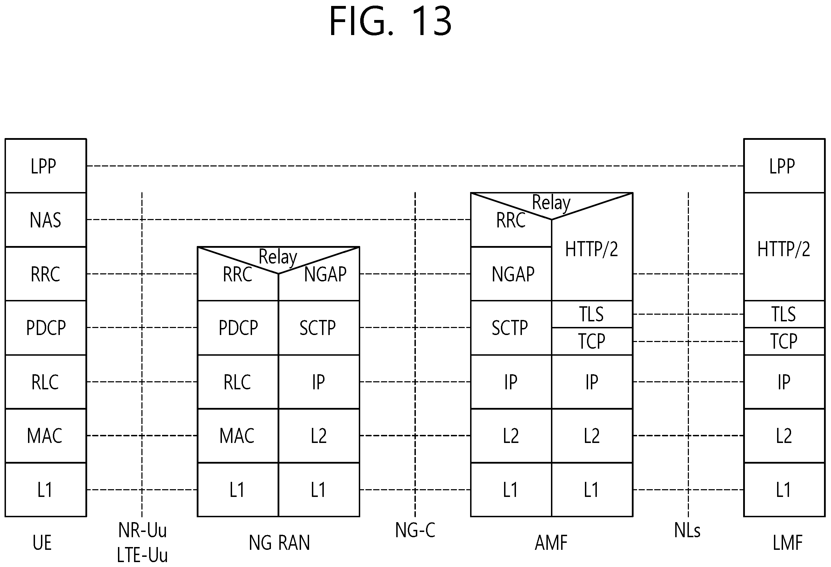

FIG. 13 shows an example of a protocol layer used to support LTE positioning protocol (LPP) message transmission between an LMF and a UE based on an embodiment of the present disclosure. The embodiment of FIG. 13 may be combined with various embodiments of the present disclosure.

An LPP PDU may be transmitted through a NAS PDU between an AMF and the UE. Referring to FIG. 13, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

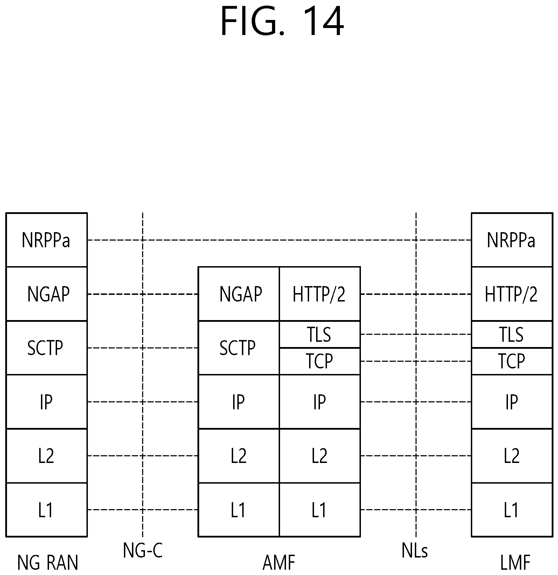

FIG. 14 shows an example of a protocol layer used to support NR positioning protocol A (NRPPa) PDU transmission between an LMF and an NG-RAN node based on an embodiment of the present disclosure. The embodiment of FIG. 14 may be combined with various embodiments of the present disclosure.

The NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF. Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a UE associated procedure for transferring information on a specific UE (e.g., location measurement information or the like), and a second type is a non UE associated procedure for transferring information (e.g., gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

(1) OTDOA (Observed Time Difference Of Arrival)

FIG. 13 is a drawing for explaining an OTDOA positioning method based on an embodiment of the present disclosure. The embodiment of FIG. 13 may be combined with various embodiments of the present disclosure.

The OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a location of the UE may be determined based on such a measurement result and geometric coordinates of neighboring TPs.

A UE connected to a gNB may request for a measurement gap for OTDOA measurement from the TP. If the UE cannot recognize a single frequency network (SFN) for at least one TP in the OTDOA assistance data, the UE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. That is, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a location of a UE. In this case, since accuracy and/or uncertainty for each TOA measurement may be present, the estimated location of the UE may be known as a specific range based on measurement uncertainty.

For example, RSTD for two TPs may be calculated based on Equation 1.

[Equation 1]

$$RSTD_{i,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Herein, c may be the speed of light, {xt, yt} may be a (unknown) coordinate of a target UE, {xi, yi} may be a coordinate of a (known) TP, and {x1, y1} may be a coordinate of a reference TP (or another TP). Herein, (Ti-T1) may be referred to as "real time differences (RTDs)" as a transmission time offset between two TPs, and ni, n1 may represent values related to UE TOA measurement errors.

(2) E-CID (Enhanced Cell ID)

In a cell ID (CID) positioning method, a location of a UE may be measured through geometric information of a serving ng-eNB, serving gNB, and/or serving cell of the UE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE location estimation value. In the E-CID positioning method, although some of the measurement methods which are the same as those used in a measurement control system of an RRC protocol may be used, additional measurement is not performed in general only for location measurement of the UE. In other words, a measurement configuration or a measurement control message may not be provided additionally to measure the location of the UE. Also, the UE may not expect that an additional measurement operation only for location measurement will be requested, and may report a measurement value obtained through measurement methods in which the UE can perform measurement in a general manner.

For example, the serving gNB may use an E-UTRA measurement value provided from the UE to implement the E-CID positioning method.

Examples of a measurement element that can be used for E-CID positioning may be as follows.

- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io
- E-UTRAN measurement: ng-eNB Rx-Tx Time difference, timing advance (TADV), angle of arrival (AoA)

Herein, the TADV may be classified into Type 1 and Type 2 as follows.

TADV Type 1 = (ng-eNB Rx-Tx time difference)+(UE E-UTRA Rx-Tx time difference)
TADV Type 2 = ng-eNB Rx-Tx time difference

Meanwhile, AoA may be used to measure a direction of the UE. The AoA may be defined as an estimation angle with respect to the location of the UE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

(3) UTDOA (Uplink Time Difference of Arrival)

UTDOA is a method of determining a location of a UE by estimating an arrival time of SRS. When calculating an estimated SRS arrival time, the location of the UE may be estimated through an arrival time difference with respect to another cell (or BS/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

Table 13 shows an example of reference signal time difference (RSTD). The RSTD of Table 13 may be applied for SL positioning.

[Table 13]

| Definition | The relative timing difference between the E-UTRA neighbour cell j and the E-UTRA reference cell i, defined as $T_{SubframeRxj}$ - $T_{SubframeRxi}$, Where: $T_{SubframeRxj}$ is the time when the UE receives the start of one subframe from E-UTRA cell j $T_{SubframeRxi}$ is the time when the UE receives the corresponding start of one subframe from E-UTRA cell i that is closest in time to the subframe received from E-UTRA cell j. The reference point for the observed subframe time difference shall be the antenna connector of the UE. |
|---|---|
| Applicable for | RRC_CONNECTED inter-RAT |

Table 14 shows an example of DL PRS reference signal received power (RSRP). The DL PRS RSRP of Table 14 may be applied for SL positioning.

[Table 14]

| Definition | DL PRS reference signal received power (DL PRS-RSRP), is defined as the linear average over the power contributions (in [W]) of the resource elements that carry DL PRS reference signals configured for RSRP measurements within the considered measurement frequency bandwidth. For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
|---|---|
| Applicable for | RRC_CONNECTED intra-frequency, RRC_CONNECTED inter-frequency |

Table 15 shows an example of DL relative signal time difference (RSTD). The DL RSTD of Table 15 may be applied for SL positioning.

[Table 15]

| Definition | DL relative timing difference (DL RSTD) between the positioning node $j$ and the reference positioning node $i$, is defined as $T_{SubframeRxj} - T_{SubframeRxi}$, Where: $T_{SubframeRxj}$ is the time when the UE receives the start of one subframe from positioning node $j$. $T_{SubframeRxi}$ is the time when the UE receives the corresponding start of one subframe from positioning node i that is closest in time to the subframe received from positioning node $j$. Multiple DL PRS resources can be used to determine the start of one subframe from a positioning node. For frequency range 1, the reference point for the DL RSTD shall be the antenna connector of the UE. For frequency range 2, the reference point for the DL RSTD shall be the antenna of the UE. |
|---|---|
| Applicable for | RRC_CONNECTED intra-frequency RRC_CONNECTED inter-frequency |

Table 16 shows an example of UE Rx-Tx time difference. The UE Rx-Tx time difference of Table 16 may be applied for SL positioning.

[Table 16]

| Definition | The UE Rx - Tx time difference is defined as $T_{UE-RX} - T_{UE-TX}$ Where: $T_{UE-RX}$ is the UE received timing of downlink subframe #$i$ from a positioning node, defined by the first detected path in time. $T_{UE-TX}$ is the UE transmit timing of uplink subframe #$j$ that is closest in time to the subframe #i received from the positioning node. Multiple DL PRS resources can be used to determine the start of one subframe of the first arrival path of the positioning node. For frequency range 1, the reference point for $T_{UE-RX}$ measurement shall be the Rx antenna connector of the UE and the reference point for $T_{UE-Tx}$ measurement shall be the Tx antenna connector of the UE. For frequency range 2, the reference point for $T_{UE-RX}$ measurement shall be the Rx antenna of the UE and the reference point for $T_{UE-TX}$ measurement shall be the Tx antenna of the UE. |
|---|---|
| Applicable for | RRC_CONNECTED intra-frequency RRC_CONNECTED inter-frequency |

Table 17 shows an example of UL Relative Time of Arrival (UL RTOA) ($T_{UL-RTOA}$). The UL RTOA of Table 17 may be applied for SL positioning.

[Table 17]

| Definition | [The UL Relative Time of Arrival ($T_{UL-RTOA}$) is the beginning of subframe *i* containing SRS received in positioning node *j*, relative to the configurable reference time.] |
|---|---|
| | Multiple SRS resources for positioning can be used to determine the beginning of one subframe containing SRS received at a positioning node. |
| | The reference point for $T_{UL-RTOA}$ shall be: |
| | - for type 1-C base station TS 38.104 [9]: the Rx antenna connector, |
| | - for type 1-O or 2-O base station TS 38.104 [9]: the Rx antenna, |
| | - for type 1-H base station TS 38.104 [9]: the Rx Transceiver Array Boundary connector. |

Table 18 shows an example of gNB Rx-Tx time difference. The gNB Rx-Tx time difference of Table 18 may be applied for SL positioning.

[Table 18]

| Definition | The gNB Rx - Tx time difference is defined as $T_{gNB-RX} - T_{gNB-TX}$ |
|---|---|
| | Where: |
| | $T_{gNB-RX}$ is the positioning node received timing of uplink subframe #i containing SRS associated with UE, defined by the first detected path in time. |
| | $T_{gNB-TX}$ is the positioning node transmit timing of downlink subframe #j that is closest in time to the subframe #i received from the UE. Multiple SRS resources for positioning can be used to determine the start of one subframe containing SRS. |
| | The reference point for $T_{gNB-RX}$ shall be: |
| | - for type 1-C base station TS 38.104 [9]: the Rx antenna connector, |
| | - for type 1-O or 2-O base station TS 38.104 [9]: the Rx antenna, |
| | - for type 1-H base station TS 38.104 [9]: the Rx Transceiver Array Boundary connector. |
| | The reference point for $T_{gNB-TX}$ shall be: |
| | - for type 1-C base station TS 38.104 [9]: the Tx antenna connector, |
| | - for type 1-O or 2-O base station TS 38.104 [9]: the Tx antenna, |
| | - for type 1-H base station TS 38.104 [9]: the Tx Transceiver Array Boundary connector. |

Table 19 shows an example of UL Angle of Arrival (AoA). The UL AoA of Table 19 may be applied for SL positioning.

[Table 19]

| Definition | UL Angle of Arrival (UL AoA) is defined as the estimated azimuth angle and vertical angle of a UE with respect to a reference direction, wherein the reference direction is defined: |
|---|---|
| | - In the global coordinate system (GCS), wherein estimated azimuth angle is measured relative to geographical North and is positive in a counter-clockwise direction and estimated vertical angle is measured relative to zenith and positive to horizontal direction |
| | - In the local coordinate system (LCS), wherein estimated azimuth angle is measured relative to x-axis of LCS and positive in a counter-clockwise direction and estimated vertical angle is measured relatize to z-axis of LCS and positive to x-y plane direction. The bearing, downtilt and slant angles of LCS are defined according to TS 38.901 [14]. |
| | The UL AoA is determined at the gNB antenna for an UL channel corresponding to this UE. |

Table 20 shows an example of UL SRS reference signal received power (RSRP). The UL SRS RSRP of Table 20 may be applied for SL positioning.

[Table 20]

| Definition | UL SRS reference signal received power (UL SRS-RSRP) is defined as linear average of the power contributions (in [W]) of the resource elements carrying sounding reference signals (SRS). UL SRS-RSRP shall be measured over the configured resource elements within the considered measurement frequency bandwidth in the configured measurement time occasions. For frequency range 1, the reference point for the UL SRS-RSRP shall be the antenna connector of the gNB. For frequency range 2, UL SRS-RSRP shall be measured based on the combined signal from antenna elements corresponding to a given receiver branch. For frequency range 1 and 2, if receiver diversity is in use by the gNB, the reported UL SRS-RSRP value shall not be lower than the corresponding UL SRS-RSRP of any of the individual receiver branches. |
|---|---|

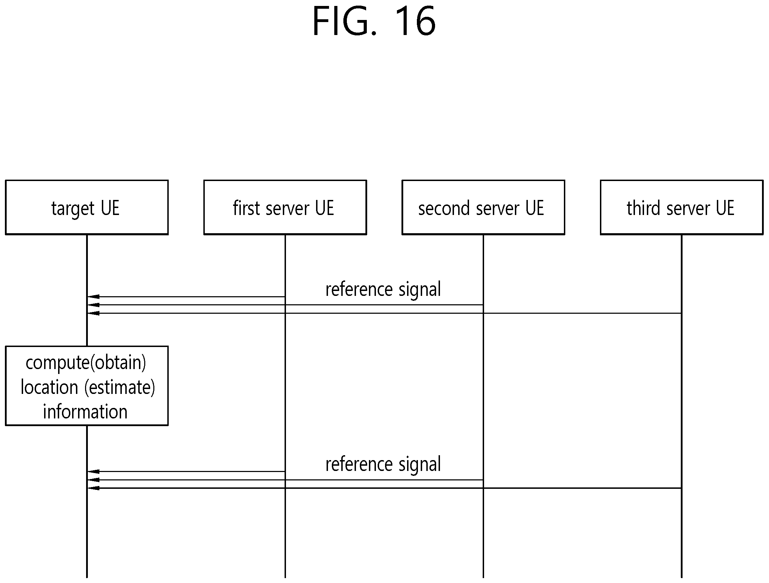

FIG. 16 is a drawing for explaining a problem of a method of performing wireless communication related to SL PRS based on an embodiment of the present disclosure. The embodiment of FIG. 16 may be combined with various embodiments of the present disclosure.

Referring to FIG. 16, according to an embodiment of the present disclosure, a location of a target UE may be measured based on, for example, OTDOA(observed time difference of arrival) or round trip time (RTT). For example, the target UE may be a UE that is being positioned. For example, the target UE may transmit an SL PRS to at least one server UE. For example, at least one server UE may be a physical or logical entity that assists, requests, or manages positioning for the target UE. For example, the at least one server UE may transmit at least one first SL PRS to the target UE. For example, the target UE may transmit a second SL PRS to the at least one server UE.

For example, based on a difference between a reception time of the second SL PRS and a transmission time of the at least one first SL PRS and a difference between a transmission time of the second SL PRS and a reception time of the at least one first SL PRS, the target UE may be able to calculate a distance between the target UE and at least one server UE. For example, based on a value obtained by subtracting a difference value between the transmission time of the second SL PRS and the reception time of the at least one first SL PRS from a difference value between the reception time of the second SL PRS and the transmission time of the at least one first SL PRS, the target UE may be able to calculate a distance between the target UE and at least one server UE. For example, based on a location of at least one server UE and a distance between the target UE and the at least one server UE, the target UE may calculate a location of the target UE.

For example, based on the SL PRS of each of the first server UE, the second server UE, and the third server UE, a time of arrival (TOA) for each of the first server UE, the second server UE, and the third server UE may be measured. For example, based on the at least three TOAs, a first reference signal time difference (RSTD) between the first server UE and the second server UE, a second RSTD between the first server UE and the third server UE, and a third RSTD between the second server UE and the third server UE may be calculated. For example, the location of the target UE may be estimated as the point where the geometric hyperbolas determined based on the respective RSTDs intersect.

For example, the target UE may perform a first SL positioning based on the at least one first SL PRS. For example, the target UE may perform a second SL PRS based on the at least one second SL PRS. For example, the SL PRS may not be properly received, and/or the SL positioning may not be properly performed. For example, information may be sent to the server UE to represent whether the SL PRS was received. For example, information may be transmitted to the server UE representing that a retransmission of the SL PRS is required. For example, information may be transmitted to the server UE representing that a retransmission of the SL PRS is not required. For example, if information representing that retransmission of the SL PRS is required or information representing that retransmission of the SL PRS is not required is sent unconditionally, the performance of the SL positioning may be reduced. For example, if information representing that a retransmission of the SL PRS is required or information representing that a retransmission of the SL PRS is not required is sent unconditionally, SL PRS resources may be wasted. For example, if information representing that a retransmission of the SL PRS is required or information representing that a retransmission of the SL PRS is not required is transmitted unconditionally, the blind retransmission of the SL PRS may be increased.

On the other hand, according to one embodiment of the present disclosure, SL PRS transmission and reception may fail due to, for example, SL PRS transmission resources among multiple UEs in SL positioning as opposed to base station-based positioning, and/or due to half-duplex issues such as UEs transmitting on different channels.

In accordance with one embodiment of the present disclosure, a method and apparatus for transmitting to a TX UE whether the RX UE has successfully received an SL PRS for an SL PRS transmitted by the TX UE when performing SL positioning, for example, may be proposed.

In the present disclosure, the following terms may be used.

UE-triggered SL positioning - SL(sidelink) positioning where the procedure is triggered by UE
gNB/LMF-triggered SL positioning - SL positioning where the procedure is triggered by gNB/LMF
UE-controlled SL positioning - SL positioning where the SL positioning group is created by UE

gNB-controlled SL positioning - SL positioning where the SL positioning group is created by gNB

UE-based SL positioning - SL positioning where the UE position is calculated by UE

UE-assisted SL positioning - SL positioning where the UE position is calculated by gNB/LMF

SL positioning group - UEs that participates in SL positioning

Target UE (T-UE) - UE whose position is calculated

Server UE (S-UE) - UE that assists T-UE's SL positioning

MG - measurement gap where only SL PRS transmission is allowed)

MW - measurement window where both SL data and SL PRS can be transmitted in a multiplexed way

According to an embodiment of the present disclosure, an SL PRS transmission resource may be configured as an SL PRS resource set configured with the following information.

- SL PRS resource set ID
- SL PRS resource ID list - SL PRS resource ID list in SL PRS resource set
- SL PRS resource type - It can be set as periodic or aperiodic or semi-persistent or on-demand
- Alpha for SL PRS power control
- P0 for SL PRS power control
- Path loss reference for SL PRS power control - It can be configured to SL SSB or DL PRS or UL SRS or UL SRS for positioning or PSCCH DMRS or PSSCH DMRS or PSFCH or SL CSI RS, etc.

According to an embodiment of the present disclosure, the SL PRS resource set may be configured as an SL PRS resource that is configured with the following information.

- SL PRS resource ID
- SL PRS comb size - Interval between REs where an SL PRS is transmitted within a symbol
- SL PRS comb offset - RE index where an SL PRS is first transmitted within a first SL PRS symbol
- SL PRS comb cyclic shift - Cyclic shift used to generate a sequence constituting an SL PRS
- SL PRS start position - The first symbol index to transmit an SL PRS within one slot
- SL PRS # of symbols - Number of symbols constituting an SL PRS in one slot
- Freq. domain shift - The lowest frequency location (index) at which an SL PRS is transmitted in the frequency domain
- SL PRS BW - Frequency bandwidth used for SL PRS transmission
- SL PRS resource type - It can be configured as periodic or aperiodic or semi-persistent or on-demand
- SL PRS periodicity - Period in the time domain between SL PRS resources, a resource pool logical slot unit where physical or SL PRS is transmitted
- SL PRS offset - An offset in the time domain up to the start point of the first SL PRS resource based on reference timing, a resource pool logical slot unit where physical or SL PRS is transmitted. The reference timing may be SFN = 0 or DFN = 0 or the time point of successful reception or decoding of RRC/MAC-CE/DCI/SCI associated with the SL PRS resource
- SL PRS sequence ID
- SL PRS spatial relation - It can be configured to SL SSB or DL PRS or UL SRS or UL SRS for positioning or PSCCH DMRS or PSSCH DMRS or PSFCH or SL CSI RS
- SL PRS CCH - SL PRS control channel. SL PRS resource configuration information and resource location can be signaled.

In one embodiment, in response to the SL PRS transmitted by the TX UE, the RX UE may feedback the acknowledgment (ACK) or no acknowledgment (NACK) information associated with the SL PRS to the TX UE. For example, the RX UE may transmit the SL PRS NACK in at least one of the following cases.

- Receiving an SL PRS CCH comprising information regarding the SL PRS resource associated with the SL PRS, and not receiving an SL PRS associated with the SL PRS CCH. For example, the SL PRS CCH may be an SCI, SL MAC-CE, or PC5-RRC.
- Reception of an SL PRS CCH containing information regarding the SL PRS resource associated with the SL PRS, wherein the SL PRS received by the RX UE does not satisfy certain conditions. For example, the specific conditions may include that the correlation value of the SL PRS is below a certain threshold, the positioning error using the SL PRS is above a certain threshold, the deviation/difference of the positioning value using the SL PRS is above a certain threshold, or the number of SL PRS received for positioning is above (below) a certain threshold.
- The RX UE is willing to request the TX UE to transmit or retransmit additional SL PRS.

For example, the RX UE may transmit the SL PRS ACK in at least one of the following cases.

- Upon reception of an SL PRS CCH containing information regarding the SL PRS resource associated with the SL PRS, and upon reception of an SL PRS associated with the SL PRS CCH. For example, the SL PRS CCH may be an SCI, an SL MAC-CE, or a PC5-RRC.
- Reception of an SL PRS CCH containing information regarding the SL PRS resource associated with the SL PRS, wherein the SL PRS received by the RX UE satisfies certain conditions. For example, the specific condition may include that the correlation value of the SL PRS is above a certain threshold, the positioning error using the SL PRS is below a certain threshold, or the deviation/difference of the positioning value using the SL PRS is below a certain threshold.
- The RX UE is willing to indicate(represent) to the TX UE to stop further SL PRS transmission or retransmission and release the SL PRS transmission resources reserved by the TX UE.

For example, if the TX UE has not received an ACK/NACK for the SL PRS after a certain threshold time from the transmission of the SL PRS, the TX UE may consider that a DTX has occurred for the SL PRS CCH, and/or may determine that it is a NACK.

According to one embodiment of the present disclosure, for example, upon receiving an SL PRS ACK/NACK from the RX UE for an SL PRS transmitted by the TX UE, the TX UE may perform at least one of the following actions.

- (in On-demand or Aperiodic SL PRS transmission mode) After transmitting the initial SL PRS, the TX UE shall transmit an additional SL PRS only if it receives a NACK from the RX UE for the previously transmitted SL PRS and shall not transmit an additional SL PRS if it receives an ACK. For example, if an SL PRS ACK/NACK is not received from the RX UE until after a certain threshold time, it may be considered a NACK and additional SL PRS may be transmitted.
- If the number of (consecutive) NACKs received by the TX UE from the RX UE is above a certain threshold, the TX UE may reconfigure the SL PRS configuration information differently from the previously transmitted SL PRS configuration information.
- For example, the TX UE may reconfigure the SL PRS configuration information as at least one of the following:

  - The TX UE may change the SL PRS comb size to be different from the previously transmitted SL PRS comb size. For example, the SL PRS comb size may be changed to a larger value to accumulate more energy. For example, the SL PRS comb size may be changed to a smaller value to reduce the SL positioning time because the latency for the SL positioning service has become insufficient.
  - The TX UE may change the BW and/or SL PRS sequence length used to transmit the SL PRS to a larger value to reduce the positioning error. For example, the TX UE may change the BW and/or SL PRS sequence length used to transmit the SL PRS to a smaller one to steam the RE transmit power comprising the SL PRS so that UEs at a greater distance can receive the SL PRS.
  - The TX UE may increase the SL PRS transmit power to a greater extent to increase the positioning coverage.
  - If the TX UE determines that the RX UE is no longer participating in the SL positioning (e.g., due to mobility), it may abort the SL positioning procedure and restart the SL positioning procedure, i.e., it may send a request to participate in the SL positioning to new UEs in the vicinity and perform a new SL positioning procedure with UEs that have accepted the request.

For example, if the TX UE is operating in SL mode-1, or an operating mode in which the gNB or LMF allocates SL PRS transmission resources, the TX UE may report the NACK information received from the RX UE to the gNB using PUCCH or the like, such that, for example, the TX UE may be allocated additional SL PRS transmission resources by the gNB.

According to various embodiments of the present disclosure, it may be proposed, for example, that the RX UE may feedback to the TX UE whether the SL PRS has been received, so that the TX UE may retransmit the SL PRS based on this.

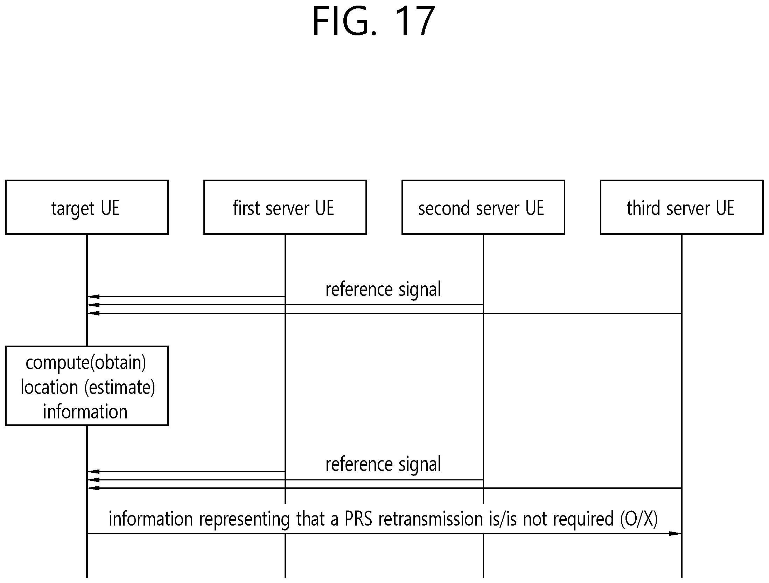

FIG. 17 is a drawing for explaining a method of performing wireless communication related to SL PRS based on an embodiment of the present disclosure. The embodiment of FIG. 17 may be combined with various embodiments of the present disclosure.

Referring to FIG. 17, according to an embodiment of the present disclosure, a location of a target UE may be measured based on, for example, OTDOA(observed time difference of arrival) or round trip time (RTT). For example, the target UE may be a UE that is being positioned. For example, the target UE may transmit an SL PRS to at least one server UE. For example, at least one server UE may be a physical or logical entity that assists, requests, or manages positioning for the target UE. For example, the at least one server UE may transmit at least one first SL PRS to the target UE. For example, the target UE may transmit a second SL PRS to the at least one server UE.

For example, based on a difference between a reception time of the second SL PRS and a transmission time of the at least one first SL PRS and a difference between a transmission time of the second SL PRS and a reception time of the at least one first SL PRS, the target UE may be able to calculate a distance between the target UE and at least one server UE. For example, based on a value obtained by subtracting a difference value between the transmission time of the second SL PRS and the reception time of the at least one first SL PRS from a difference value between the reception time of the second SL PRS and the transmission time of the at least one first SL PRS, the target UE may be able to calculate a distance between the target UE and at least one server UE. For example, based on a location of at least one server UE and a distance between the target UE and the at least one server UE, the target UE may calculate a location of the target UE.

For example, based on the SL PRS of each of the first server UE, the second server UE, and the third server UE, a time of arrival (TOA) for each of the first server UE, the second server UE, and the third server UE may be measured. For example, based on the at least three TOAs, a first reference signal time difference (RSTD) between the first server UE and the second server UE, a second RSTD between the first server UE and the third server UE, and a third RSTD between the second server UE and the third server UE may be calculated. For example, the location of the target UE may be estimated as the point where the geometric hyperbolas determined based on the respective RSTDs intersect.

For example, the target UE may perform the first SL positioning based on the at least one first SL PRS. For example, the target UE may perform the second SL PRS based on the at least one second SL PRS. For example, based on the first SL PRS and the second SL PRS, information may be transmitted to the server UE to represent whether the SL PRS was received. For example, based on the first SL PRS and the second SL PRS, information may be transmitted to the server UE representing that a retransmission of the SL PRS is required. For example, based on the first SL PRS and the second SL PRS, information may be transmitted to the server UE representing that a retransmission of the SL PRS is not required. For example, based on a correlation between the first SL PRS and the second SL PRS, information representing that a retransmission of the SL PRS is required or information representing that a retransmission of the SL PRS is not required may be transmitted. For example, based on a difference between the SL position based on the first SL PRS (e.g., a measured value of the target UE's position, an average value of the target UE's position, a predicted value of the target UE's position) and the SL position based on the second SL PRS, information representing that a retransmission of the SL PRS is required or information representing that a retransmission of the SL PRS is not required may be transmitted. For example, based on the number of SL PRSs received, including the first SL PRS and the second SL PRS, information representing that retransmission of the SL PRS is required or information representing that retransmission of the SL PRS is not required may be transmitted.

For example, information representing that a retransmission of the SL PRS is required or information representing that a retransmission of the SL PRS is not required may be conditionally transmitted. For example, the performance of the SL positioning may be improved. For example, SL PRS resources may not be wasted. For example, blind retransmissions of the SL PRS may be reduced.

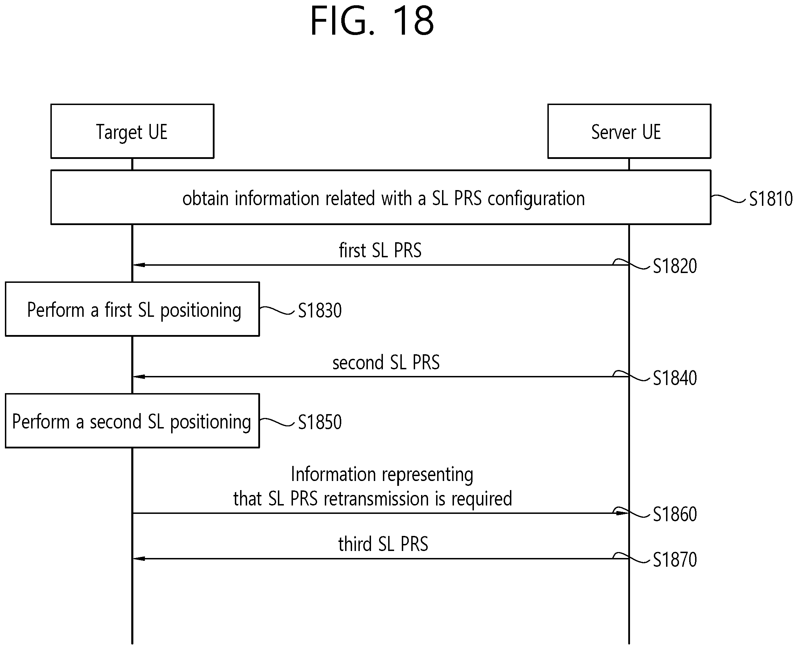

FIG. 18 is a drawing for explaining a procedure for performing wireless communication related to SL PRS based on an embodiment of the present disclosure. The embodiment of FIG. 18 may be combined with various embodiments of the present disclosure.

Referring to FIG. 18, according to one embodiment of the present disclosure, for example, the target UE and/or the server UE may obtain information related to the SL PRS configuration(s).

For example, the target UE may receive the first SL PRS(s) from the at least one server UE.

For example, the target UE may perform a first SL positioning based on the first SL PRS(s).

For example, the target UE may receive the second SL PRS(s) from the at least one server UE.

For example, the target UE may perform the second SL positioning based on the second SL PRS(s).

For example, based on the first SL PRS(s) and the second SL PRS(s), the target UE may transmit information to the server UE(s) representing that SL PRS retransmission is required. For example, based on the first SL PRS(s) and the second SL PRS(s), the target UE may transmit information to the server UE(s) representing that SL PRS retransmission is not required.

For example, the server UE(s) may transmit a third SL PRS (e.g., a retransmission of the first SL PRS, a retransmission of the second SL PRS) to the target UE.

For example, whether the rule is applied and/or the parameter value related to the proposed method/rule may be configured/allowed specifically (or differently or independently) for a SL cast type (e.g., unicast, groupcast, broadcast). For example, whether the rule is applied and/or the parameter value related to the proposed method/rule may be configured/allowed specifically (or differently or independently) for a SL groupcast HARQ feedback option (e.g., NACK only feedback, ACK/NACK feedback, NACK only feedback based on TX-RX distance). For example, whether the rule is applied and/or the parameter value related to the proposed method/rule may be configured/allowed specifically (or differently or independently) for a SL mode 1 CG type (e.g., SL CG type 1 or SL CG type 2). For example, whether the rule is applied and/or the parameter value related to the proposed method/rule may be configured/allowed specifically (or differently or independently) for a SL mode type (e.g., mode 1 or mode 2). For example, whether the rule is applied and/or the parameter value related to the proposed method/rule may be configured/allowed specifically (or differently or independently) for a resource pool. For example, whether the rule is applied and/or the parameter value related to the proposed method/rule may be configured/allowed specifically (or differently or independently) for whether a PSFCH resource is configured in a resource pool. For example, whether the rule is applied and/or the parameter value related to the proposed method/rule may be configured/allowed specifically (or differently or independently) for a source (L2) ID. For example, whether the rule is applied and/or the parameter value related to the proposed method/rule may be configured/allowed specifically (or differently or independently) for a destination (L2) ID. For example, whether the rule is applied and/or the parameter value related to the proposed method/rule may be configured/allowed specifically (or differently or independently) for a PC5 RRC connection link. For example, whether the rule is applied and/or the parameter value related to the proposed method/rule may be configured/allowed specifically (or differently or independently) for a SL link. For example, whether the rule is applied and/or the parameter value related to the proposed method/rule may be configured/allowed specifically (or differently or independently) for a connection state (with a base station) (e.g., RRC CONNECTED state, IDLE state, INACTIVE state). For example, whether the rule is applied and/or the parameter value related to the proposed method/rule may be configured/allowed specifically (or differently or independently) for a SL HARQ process (ID). For example, whether the rule is applied and/or the parameter value related to the proposed method/rule may be configured/allowed specifically (or differently or independently) for whether to perform SL DRX operation (of TX UE or RX UE). For example, whether the rule is applied and/or the parameter value related to the proposed method/rule may be configured/allowed specifically (or differently or independently) for whether a UE is a power saving (TX or RX) UE. For example, whether the rule is applied and/or the parameter value related to the proposed method/rule may be configured/allowed specifically (or differently or independently) for a case in which PSFCH TX and PSFCH RX (and/or a plurality of PSFCH TXs (exceeding UE capability)) overlap (and/or a case in which PSFCH TX (and/or PSFCH RX) is skipped) (from a specific UE perspective). For example, whether the rule is applied and/or the parameter value related to the proposed method/rule may be configured/allowed specifically (or differently or independently) for a case in which the RX UE actually (successfully) receives PSCCH (and/or PSSCH) (re)transmission from the TX UE.

For example, in the present disclosure, the term "configured/configuration (or designated/designation)" can be extended/interpreted to/as that the base station informs the UE through a pre-defined (physical layer or higher layer) channel/signal (e.g., SIB, RRC, MAC CE) (and/or being provided through pre-configuration and/or that the UE informs other UEs through a pre-defined (physical layer or higher layer) channel/signal (e.g., SL MAC CE, PC5 RRC)).

For example, in the present disclosure, the term "PSFCH" can be extended/interpreted to/as (NR or LTE) PSSCH (and/or (NR or LTE) PSCCH) (and/or (NR or LTE) SL SSB (and/or UL channel/signal)). In addition, the proposed methods of the present disclosure can be used in combination with each other (as a new type of manner).

For example, in the present disclosure, the specific threshold may refer to a threshold pre-defined or (pre-)configured by a higher layer (including an application layer) of the network, the base station, or the UE. For example, in the present disclosure, the specific configured value may refer to a value pre-defined or (pre-)configured by a higher layer (including an application layer) of the network, the base station, or the UE. For example, the operation configured by the network/base station may refer to that the base station (pre-)configures to the UE through higher layer RRC signaling or the base station configures/signals to the UE through MAC CE or the base station signals to the UE through DCI.

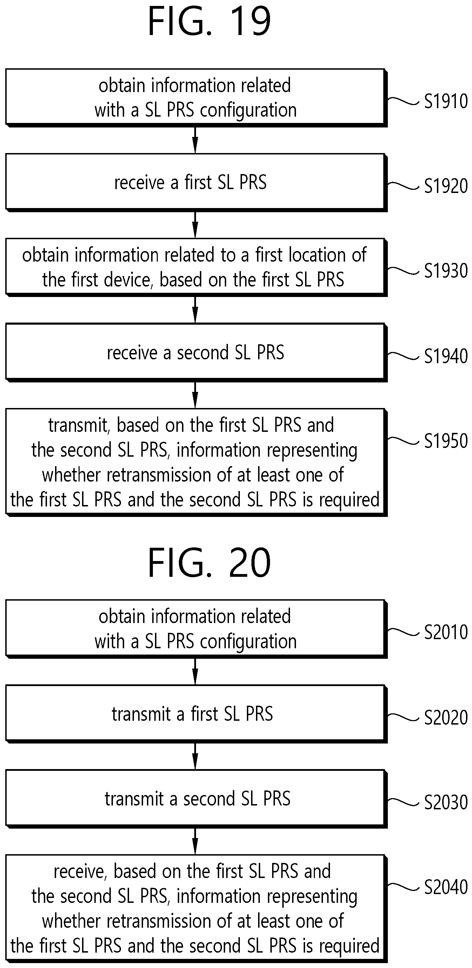

FIG. 19 is a drawing for explaining a method for performing wireless communication by a first device, based on an embodiment of the present disclosure. The embodiment of FIG. 19 may be combined with various embodiments of the present disclosure.

Referring to FIG. 19, in step S1910, for example, the first device may obtain information related with a sidelink (SL) positioning reference signal (PRS) configuration. In step S1920, for example, the first device may receive a first SL PRS. In step S1930, for example, the first device may obtain information related with a first location of the first device, based on the first SL PRS. In step S1940, for example, the first device may receive a second SL PRS. In step S1950, for example, the first device may transmit, based on the first SL PRS and the second SL PRS, information representing whether retransmission of at least one of the first SL PRS and the second SL PRS is required.

Additionally or alternatively, based on a correlation value between a first sequence of the first SL PRS and a reference sequence being less than a threshold value, information representing that the retransmission is required may be transmitted.

Additionally or alternatively, based on a difference between the first location obtained based on the first SL PRS and second location obtained based on the received second SL PRS being greater than or equal to a first threshold, information representing that the retransmission is required may be transmitted.

Additionally or alternatively, the first device may receive, through an SL PRS control channel (CCH) related with the second SL PRS, control information.

Additionally or alternatively, based on a failure of reception of the second SL PRS based on the control information, information representing that the retransmission is required may be transmitted.

Additionally or alternatively, the first SL PRS may include N SL PRS.

Additionally or alternatively, based on a standard deviation obtained from N+1 locations obtained based on the N SL PRS and the received second SL PRS being greater than or equal to a threshold value, information representing that the retransmission is required may be transmitted.

Additionally or alternatively, based on a correlation value between a first sequence of the first SL PRS and a reference sequence being greater than or equal to a threshold value, information representing that the retransmission is not required may be transmitted.

Additionally or alternatively, wherein based on a difference between the first location obtained based on the first SL PRS and second location obtained based on the received second SL PRS being less than a first threshold, information representing that the retransmission is not required may be transmitted.

Additionally or alternatively, the first device may receive, through an SL PRS control channel (CCH) related with the second SL PRS, control information,

Additionally or alternatively, based on reception of the second SL PRS based on the control information being successful, information representing that the retransmission is not required may be transmitted.

Additionally or alternatively, the first SL PRS may include N SL PRS.

Additionally or alternatively, based on a difference between first location obtained based on the N SL PRS and second location obtained based on the second SL PRS being less than a threshold value, information representing that the retransmission is not required may be transmitted.

Additionally or alternatively, the first SL PRS may include N SL PRS.

Additionally or alternatively, based on a standard deviation calculated from N+1 locations obtained based on the N SL PRS and the received second SL PRS being greater than or equal to a threshold value, information representing that the retransmission is not required may be transmitted.

Additionally or alternatively, based on a time of reception of the first SL PRS and a time of reception of two or more SL PRSs, information related with a first location of the first device may be obtained.

Additionally or alternatively, the first device may receive, through an SL PRS control channel (CCH) related with the second SL PRS, control information.

Additionally or alternatively, based on the control information, the second SL PRS may be received.

Additionally or alternatively, the information related with the SL PRS configuration may include information related with an SL PRS sequence.

Additionally or alternatively, the information related with the SL PRS configuration includes information related with an SL PRS resource element.

Additionally or alternatively, the information related with the SL PRS configuration may include information regarding a comb size.

Additionally or alternatively, the first device may re-configure the comb size based on that information representing that the retransmission is required being transmitted N times.

Additionally or alternatively, the information related with the SL PRS configuration may include at least one of information regarding a bandwidth (BW) of the SL PRS and information regarding the length of an SL PRS sequence.

Additionally or alternatively, the first device may re-configure at least one of the BW and the length of an SL PRS sequence based on information representing that the retransmission is required being transmitted N times.

Additionally or alternatively, the information related with the SL PRS configuration may include information regarding transmit power of the SL PRS.

Additionally or alternatively, the first device may re-configure the transmit power based on information representing that the retransmission is required being transmitted N times.

Additionally or alternatively, the first device may transmit a message to request positioning participation based on information representing that the retransmission is required being transmitted N times.

The proposed method may be applied to an apparatus according to various embodiments of the present disclosure. First, memory 104 of the first device 100, based on being executed by the processors 102, may store instructions to cause the first device(e.g., processors 102, transceiver 106) to perform operations. For example, the operations may include the first device(e.g., processors 102, transceiver 106): obtaining information related with a sidelink (SL) positioning reference signal (PRS) configuration; receiving a first SL PRS; obtaining information related with a first location of the first device, based on the first SL PRS; receiving a second SL PRS; and/or transmitting, based on the first SL PRS and the second SL PRS, information representing whether retransmission of at least one of the first SL PRS and the second SL PRS is required.

According to an embodiment of the present disclosure, a first device for performing wireless communication is provided. For example, the first device may include at least one processor; at least one transceiver; and at least one memory connected to the at least one processor and storing instructions that, based on being executed, cause the first device to perform operations. For example, the operations may include: obtaining information related with a sidelink (SL) positioning reference signal (PRS) configuration; For example, the operations may include: receiving a first SL PRS. For example, the operations may include: obtaining information related with a first location of the first device, based on the first SL PRS. For example, the operations may include: receiving a second SL PRS; and/or transmitting, based on the first SL PRS and the second SL PRS, information representing whether retransmission of at least one of the first SL PRS and the second SL PRS is required.

According to an embodiment of the present disclosure, an apparatus adapted to control a first user equipment (UE) is provided. For example, the apparatus may comprise: at least one processor; and at least one memory operably connectable to the at least one processor and storing instructions that, based on being executed, cause the first UE to perform operations. For example, the operations may include: obtaining information related with a sidelink (SL) positioning reference signal (PRS) configuration; For example, the operations may include: receiving a first SL PRS. For example, the operations may include: obtaining information related with a first location of the first device, based on the first SL PRS. For example, the operations may include: receiving a second SL PRS; and/or transmitting, based on the first SL PRS and the second SL PRS, information representing whether retransmission of at least one of the first SL PRS and the second SL PRS is required.

According to an embodiment of the present disclosure, non-transitory computer-readable storage medium storing instructions is proposed. For example, the instructions that, based on being executed by at least one processor, cause a first device to perform operations. For example, the operations may include: obtaining information related with a sidelink (SL) positioning reference signal (PRS) configuration; For example, the operations may include: receiving a first SL PRS. For example, the operations may include: obtaining information related with a first location of the first device, based on the first SL PRS. For example, the operations may include: receiving a second SL PRS; and/or transmitting, based on the first SL PRS and the second SL PRS, information representing whether retransmission of at least one of the first SL PRS and the second SL PRS is required.

FIG. 20 is a drawing for explaining a method for performing wireless communication by a second device, based on an embodiment of the present disclosure. The embodiment of FIG. 20 may be combined with various embodiments of the present disclosure.

Referring to FIG. 20, in step S2010, for example, the second device may obtain information related with a sidelink (SL) positioning reference signal (PRS) configuration. In step S2020, for example, the second device may transmit a first SL PRS. For example, information related with a first location of the first device may be obtained, based on the first SL PRS. In step S2030, for example, the second device may transmit a second SL PRS. In step S2040, for example, the second device may receive, based on the first SL PRS and the second SL PRS, information representing whether retransmission of at least one of the first SL PRS and the second SL PRS is required.

Additionally or alternatively, based on a correlation value between a first sequence of the first SL PRS and a reference sequence being less than a threshold value, information representing that the retransmission is required may be received.

Additionally or alternatively, based on a difference between the first location obtained based on the first SL PRS and second location obtained based on the received second SL PRS being greater than or equal to a first threshold, information representing that the retransmission is required may be received.

Additionally or alternatively, the first SL PRS may include N SL PRS.

Additionally or alternatively, based on a standard deviation obtained from N+1 locations obtained based on the N SL PRS and the received second SL PRS being greater than or equal to a threshold value, information representing that the retransmission is required may be transmitted.

Additionally or alternatively, based on a correlation value between a first sequence of the first SL PRS and a reference sequence being greater than or equal to a threshold value, information representing that the retransmission is not required may be transmitted.

Additionally or alternatively, wherein based on a difference between the first location obtained based on the first SL PRS and second location obtained based on the received second SL PRS being less than a first threshold, information representing that the retransmission is not required may be transmitted.

Additionally or alternatively, the first SL PRS may include N SL PRS.

Additionally or alternatively, based on a standard deviation calculated from N+1 locations obtained based on the N SL PRS and the received second SL PRS being greater than or equal to a threshold value, information representing that the retransmission is not required may be transmitted.

Additionally or alternatively, based on a time of reception of the first SL PRS and a time of reception of two or more SL PRSs, information related with a first location of the first device may be obtained.

Additionally or alternatively, the second device may transmit, through an SL PRS control channel (CCH) related with the second SL PRS, control information.

Additionally or alternatively, based on the control information, the second SL PRS may be transmitted.

Additionally or alternatively, the information related with the SL PRS configuration may include information related with an SL PRS sequence.

Additionally or alternatively, the information related with the SL PRS configuration includes information related with an SL PRS resource element.

Additionally or alternatively, the information related with the SL PRS configuration may include information regarding a comb size.

Additionally or alternatively, the second device may re-configure the comb size based on that information representing that the retransmission is required being transmitted N times.

Additionally or alternatively, the information related with the SL PRS configuration may include at least one of information regarding a bandwidth (BW) of the SL PRS and information regarding the length of an SL PRS sequence.

Additionally or alternatively, the second device may re-configure at least one of the BW and the length of an SL PRS sequence based on information representing that the retransmission is required being transmitted N times.

Additionally or alternatively, the information related with the SL PRS configuration may include information regarding transmit power of the SL PRS.

Additionally or alternatively, the second device may re-configure the transmit power based on information representing that the retransmission is required being transmitted N times.

Additionally or alternatively, the second device may transmit a message to request positioning participation based on information representing that the retransmission is required being transmitted N times.

The proposed method may be applied to a device according to various embodiments of the present disclosure. First, memory 204 of the second device 200, based on being executed by the processors 202, may store instructions to cause the second device(e.g., processors 202, transceiver 206) to perform operations. For example, the operations may include the second device(e.g., processors 202, transceiver 206): obtaining information related with a sidelink (SL) positioning reference signal (PRS) configuration. For example, the operations may include the second device(e.g., processors 202, transceiver 206): transmitting a first SL PRS. For example, information related with a first location of the first device may be obtained, based on the first SL PRS. For example, the operations may include the second device(e.g., processors 202, transceiver 206): transmitting a second SL PRS. For example, the operations may include the second device(e.g., processors 202, transceiver 206): receiving, based on the first SL PRS and the second SL PRS, information representing whether retransmission of at least one of the first SL PRS and the second SL PRS is required.

According to an embodiment of the present disclosure, A second device for performing wireless communication may be provided. For example, the second device may comprise: at least one processor; at least one transceiver; and at least one memory connected to the at least one processor and storing instructions that, based on being executed, cause the second device to perform operations. For example, the operations may include: obtaining information related with a sidelink (SL) positioning reference signal (PRS) configuration. For example, the operations may include: transmitting a first SL PRS. For example, information related with a first location of the first device may be obtained, based on the first SL PRS. For example, the operations may include: transmitting a second SL PRS. For example, the operations may include: receiving, based on the first SL PRS and the second SL PRS, information representing whether retransmission of at least one of the first SL PRS and the second SL PRS is required.

According to an embodiment of the present disclosure, an apparatus adapted to control a second user equipment (UE) may be provided. For example, the apparatus may comprise: at least one processor; and at least one memory connected to the at least one processor and storing instructions that, based on being executed, cause the second UE to perform operations. For example, the operations may include: obtaining information related with a sidelink (SL) positioning reference signal (PRS) configuration. For example, the operations may include: transmitting a first SL PRS. For example, information related with a first location of the first device may be obtained, based on the first SL PRS. For example, the operations may include: transmitting a second SL PRS. For example, the operations may include: receiving, based on the first SL PRS and the second SL PRS, information representing whether retransmission of at least one of the first SL PRS and the second SL PRS is required.

According to an embodiment of the present disclosure, non-transitory computer-readable storage medium storing instructions may be proposed. For example, the instructions, based on being executed by one or more processor, cause a second device to perform operations. For example, the operations may include: obtaining information related with a sidelink (SL) positioning reference signal (PRS) configuration. For example, the operations may include: transmitting a first SL PRS. For example, information related with a first location of the first device may be obtained, based on the first SL PRS. For example, the operations may include: transmitting a second SL PRS. For example, the operations may include: receiving, based on the first SL PRS and the second SL PRS, information representing whether retransmission of at least one of the first SL PRS and the second SL PRS is required.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

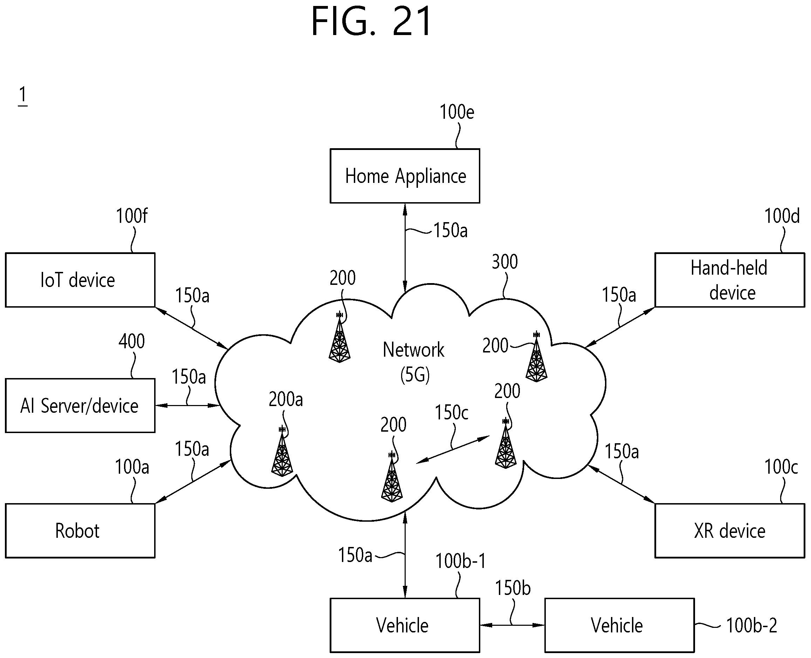

FIG. 21 shows a communication system 1, based on an embodiment of the present disclosure. The embodiment of FIG. 21 may be combined with various embodiments of the present disclosure.

Referring to FIG. 21, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

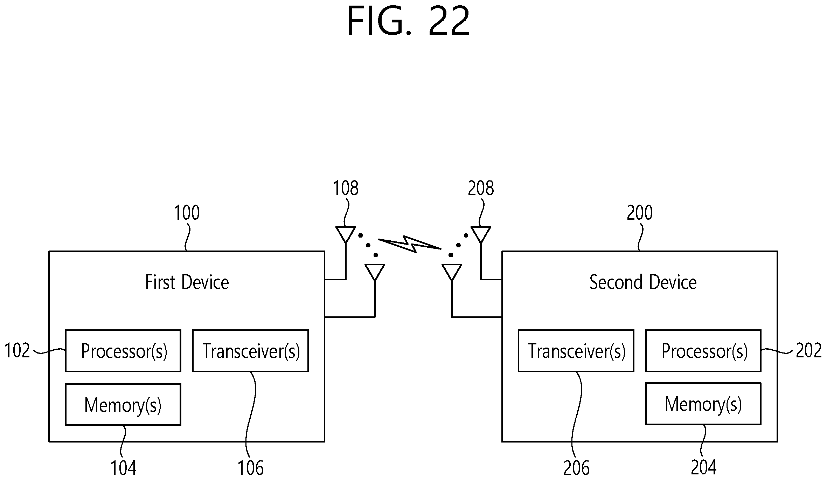

FIG. 22 shows wireless devices, based on an embodiment of the present disclosure. The embodiment of FIG. 22 may be combined with various embodiments of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and at least one memory 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and at least one memory 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

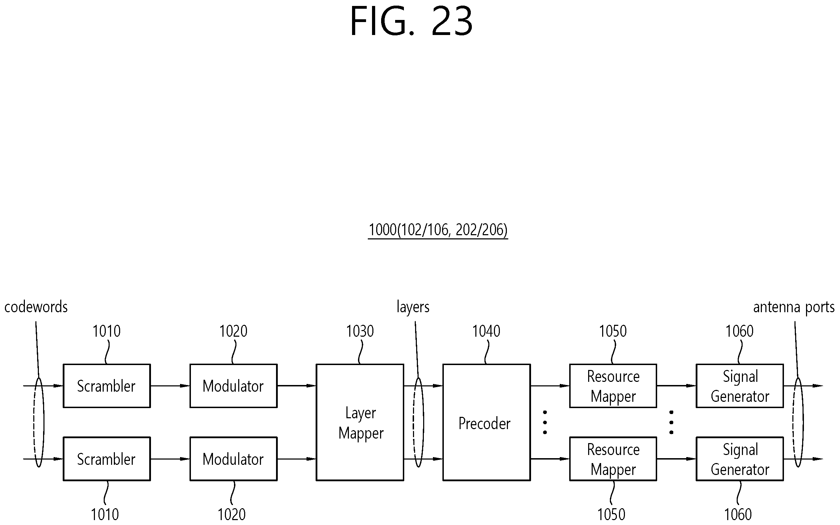

FIG. 23 shows a signal process circuit for a transmission signal, based on an embodiment of the present disclosure. The embodiment of FIG. 23 may be combined with various embodiments of the present disclosure.

Referring to FIG. 23, a signal processing circuit 1000 may include scramblers 1010, modulators 1020, a layer mapper 1030, a precoder 1040, resource mappers 1050, and signal generators 1060. An operation/function of FIG. 23 may be performed, without being limited to, the processors 102 and 202 and/or the transceivers 106 and 206 of FIG. 22. Hardware elements of FIG. 23 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 23. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 23. For example, the wireless devices (e.g., 100 and 200 of FIG. 22) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

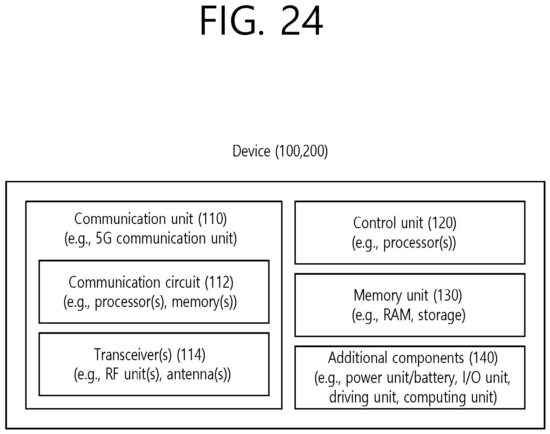

FIG. 24 shows another example of a wireless device, based on an embodiment of the present disclosure. The wireless device may be implemented in various forms according to a use-case/service (refer to FIG. 21). The embodiment of FIG. 24 may be combined with various embodiments of the present disclosure.

Referring to FIG. 24, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 24 will be described in detail with reference to the drawings.

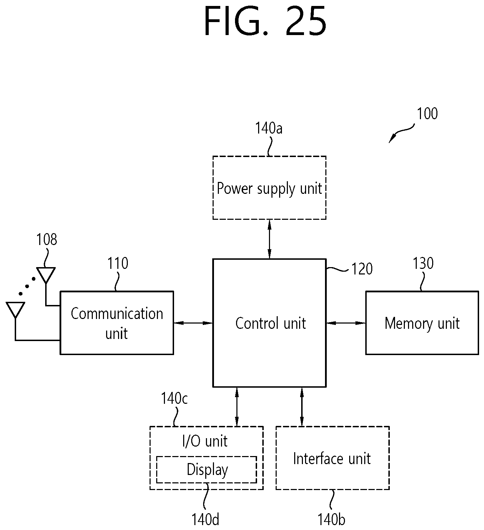

FIG. 25 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 25 may be combined with various embodiments of the present disclosure.

Referring to FIG. 25, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 24, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

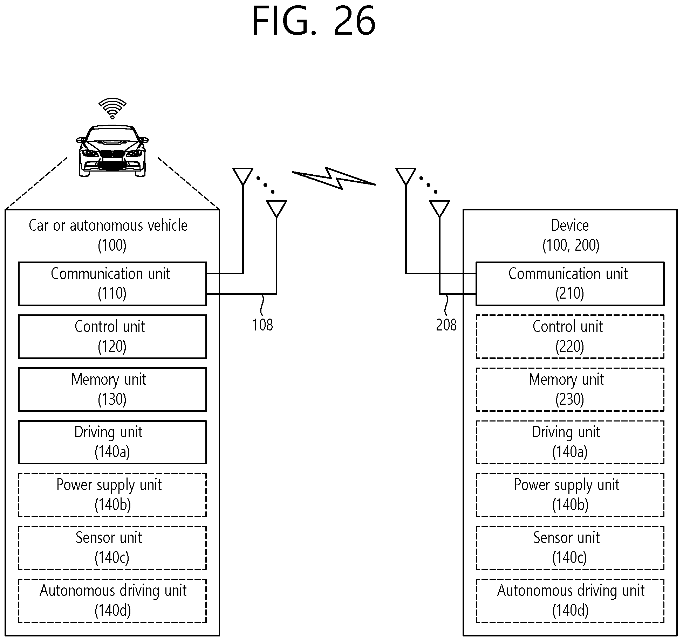

FIG. 26 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 26 may be combined with various embodiments of the present disclosure.

Referring to FIG. 26, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

   obtaining information related with a sidelink (SL) positioning reference signal (PRS) configuration;
   receiving a first SL PRS;
   obtaining information related with a first location of the first device, based on the first SL PRS;
   receiving a second SL PRS; and

transmitting, based on the first SL PRS and the second SL PRS, information representing whether retransmission of at least one of the first SL PRS and the second SL PRS is required.

2. The method of claim 1, wherein based on a correlation value between a first sequence of the first SL PRS and a reference sequence being less than a threshold value, information representing that the retransmission is required is transmitted.

3. The method of claim 1, wherein based on a difference between the first location obtained based on the first SL PRS and a second location obtained based on the received second SL PRS being greater than or equal to a first threshold, information representing that the retransmission is required is transmitted.

4. The method of claim 1, further comprising: receiving, through an SL PRS control channel (CCH) related with the second SL PRS, control information,
wherein, based on a failure of reception of the second SL PRS based on the control information, information representing that the retransmission is required is transmitted.

5. The method of claim 1, wherein the first SL PRS includes N SL PRS, and
wherein based on a standard deviation obtained from N+1 locations obtained based on the N SL PRS and the received second SL PRS being greater than or equal to a threshold value, information representing that the retransmission is required is transmitted.

6. The method of claim 1, wherein, based on a correlation value between a first sequence of the first SL PRS and a reference sequence being greater than or equal to a threshold value, information representing that the retransmission is not required is transmitted.

7. The method of claim 1, wherein based on a difference between the first location obtained based on the first SL PRS and a second location obtained based on the received second SL PRS being less than a first threshold, information representing that the retransmission is not required is transmitted.

8. The method of claim 1, further comprising:

   receiving, through an SL PRS control channel (CCH) related with the second SL PRS, control information, and wherein, based on reception of the second SL PRS based on the control information being successful, information representing that the retransmission is not required is transmitted.

9. The method of claim 1, wherein the first SL PRS includes N SL PRS, and
wherein based on a standard deviation calculated from N+1 locations obtained based on the N SL PRS and the received second SL PRS being greater than or equal to a threshold value, information representing that the retransmission is not required is transmitted.

10. The method of claim 1, wherein based on a time of reception of the first SL PRS and times of reception of two or more SL PRSs, the information related with the first location of the first device is obtained.

11. The method of claim 1, further comprising:

   receiving, through an SL PRS control channel (CCH) related with the second SL PRS, control information; and wherein, based on the control information, the second SL PRS is received.

12. The method of claim 1, wherein the information related with the SL PRS configuration includes information related with an SL PRS sequence.

13. The method of claim 1, wherein the information related with the SL PRS configuration includes information related with an SL PRS resource element.

14. A first device for performing wireless communication, the first device comprising:

   at least one processor;
   at least one transceiver; and

at least one memory connected to the at least one processor and storing instructions that, based on being executed, cause the first device to perform operations comprising:

obtaining information related with a sidelink (SL) positioning reference signal (PRS) configuration;
receiving a first SL PRS;
obtaining information related with a first location of the first device based on the first SL PRS;
receiving a second SL PRS; and
transmitting, based on the first SL PRS and the second SL PRS, information representing whether retransmission of at least one of the first SL PRS and the second SL PRS is required.

15. An apparatus adapted to control a first user equipment (UE), the apparatus comprising:

at least one processor; and
at least one memory operably connectable to the at least one processor and storing instructions that, based on being executed, cause the first UE to perform operations comprising:

obtaining information related with a sidelink (SL) positioning reference signal (PRS) configuration;
receiving a first SL PRS;
obtaining information related with a first location of the first device based on the first SL PRS;
receiving a second SL PRS; and
transmitting, based on the first SL PRS and the second SL PRS, information representing whether retransmission of at least one of the first SL PRS and the second SL PRS is required.

16. non-transitory computer-readable medium storing instructions that, based on being executed by at least one processor, cause a first device to perform operations comprising:

obtaining information related with a sidelink (SL) positioning reference signal (PRS) configuration;
receiving a first SL PRS;
obtaining information related with a first location of the first device based on the first SL PRS;
receiving a second SL PRS; and
transmitting, based on the first SL PRS and the second SL PRS, information representing whether retransmission of at least one of the first SL PRS and the second SL PRS is required.

17. A method for performing wireless communication by a second device, the method comprising:

obtaining information related with a sidelink (SL) positioning reference signal (PRS) configuration;
transmitting a first SL PRS;
wherein, information related with a first location of a first device is obtained, based on the first SL PRS;
transmitting a second SL PRS; and
receiving, based on the first SL PRS and the second SL PRS, information representing whether retransmission of at least one of the first SL PRS and the second SL PRS is required.

18. The method of claim 17, wherein the information related with the SL PRS configuration includes information regarding a comb size, and further comprising:
re-configuring the comb size based on that information representing that the retransmission is required being transmitted N times.

19. The method of claim 17, wherein the information related with the SL PRS configuration may include at least one of information regarding a bandwidth (BW) of the SL PRS and information regarding the length of an SL PRS sequence, and further comprising:
re-configuring at least one of the BW and the length of an SL PRS sequence based on information representing that the retransmission is required being transmitted N times.

20. The method of claim 17, wherein the information related with the SL PRS configuration may include information regarding transmit power of the SL PRS, and further comprising:
re-configuring the transmit power based on information representing that the retransmission is required being transmitted N times.

21. The method of claim 17, further comprising:
    transmitting a message to request positioning participation based on information representing that the retransmission is required being transmitted N times.

22. A second device for performing wireless communication, the second device comprising:

    at least one processor;
    at least one transceiver; and
    at least one memory connected to the at least one processor and storing instructions that, based on being executed, cause the second device to perform operations comprising:

    obtaining information related with a sidelink (SL) positioning reference signal (PRS) configuration;
    transmitting a first SL PRS;
    wherein, information related with a first location of a first device is obtained, based on the first SL PRS;
    transmitting a second SL PRS; and
    receiving, based on the first SL PRS and the second SL PRS, information representing whether retransmission of at least one of the first SL PRS and the second SL PRS is required.

23. An apparatus adapted to control a second user equipment (UE), the apparatus comprising:

    at least one processor; and
    at least one memory operably connectable to the at least one processor and storing instructions that, based on being executed, cause the second UE to perform operations comprising:

    obtaining information related with a sidelink (SL) positioning reference signal (PRS) configuration;
    transmitting a first SL PRS;
    wherein, information related with a first location of a first device is obtained, based on the first SL PRS;
    transmitting a second SL PRS; and
    receiving, based on the first SL PRS and the second SL PRS, information representing whether retransmission of at least one of the first SL PRS and the second SL PRS is required.

24. A non-transitory computer-readable medium storing instructions that, based on being executed by at least one processor, cause a second device to perform operations comprising:

    obtaining information related with a sidelink (SL) positioning reference signal (PRS) configuration;
    transmitting a first SL PRS;
    wherein, information related with a first location of a first device is obtained, based on the first SL PRS;
    transmitting a second SL PRS; and
    receiving, based on the first SL PRS and the second SL PRS, information representing whether retransmission of at least one of the first SL PRS and the second SL PRS is required.

# FIG. 1

# FIG. 2

EP 4 514 037 A1

Radio | Microwave | Infrared | Visible | Ultraviolet | X-Ray | Gamma-Ray

mmWave | Terahertz

Wavelength  $10^8$ m  1m  10mm  1mm  0.1mm  700nm  390nm  10nm  0.01nm

Radiation Type

Frequency  3 Hz  300 MHz  30 GHz  300 GHz  3 THz  430 THz  730 THz  30 PHz  30 EHz

Mega : $10^6$    Giga : $10^9$    Tera : $10^{12}$    Peta : $10^{15}$    Exa : $10^{18}$

# FIG. 3

# FIG. 4

**(a)**

| UE | | gNB |
|---|---|---|
| SDAP | ↔ | SDAP |
| PDCP | ↔ | PDCP |
| RLC | ↔ | RLC |
| MAC | ↔ | MAC |
| PHY | ↔ | PHY |

**(b)**

| UE | | gNB | AMF |
|---|---|---|---|
| NAS | | | NAS |
| RRC | ↔ | RRC | |
| PDCP | ↔ | PDCP | |
| RLC | ↔ | RLC | |
| MAC | ↔ | MAC | |
| PHY | ↔ | PHY | |

**(c)**

| UE A | | UE B |
|---|---|---|
| SDAP | ↔ | SDAP |
| PDCP | ↔ | PDCP |
| RLC | ↔ | RLC |
| MAC | ↔ | MAC |
| PHY | ↔ | PHY |

PC5-U

**(d)**

| UE A | | UE B |
|---|---|---|
| RRC | ↔ | RRC |
| PDCP | ↔ | PDCP |
| RLC | ↔ | RLC |
| MAC | ↔ | MAC |
| PHY | ↔ | PHY |

PC5-C

# FIG. 5

# FIG. 6

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 514 037 A1

# FIG. 7

PRB N3

PRB 1

PRB 0

$N_{BWP, 2}^{size}$

PRB N2

PRB 1

PRB 0

$N_{BWP, 1}^{size}$

PRB N1

PRB 1

PRB 0

$N_{BWP, 0}^{size}$

CRB 0

$N_{BWP, 0}^{start}$

$N_{BWP, 1}^{start}$

$N_{BWP, 2}^{start}$

Carrier Bandwidth

Freq.

Time

PRB 0 (Point A) in reference resource block

# FIG. 8

(a)                                    (b)

# FIG. 9

(a)                    (b)                    (c)

●: TX UE

⊘: RX UE

# FIG. 10

GNSS

Directly
synchronized to GNSS
(In Coverage)

Directly
synchronized to BS

Directly
synchronized to GNSS
(Out Coverage)

BS

Network Coverage

Indirectly
synchronized to BS

Indirectly
synchronized to GNSS

Independent
synchronization source

EP 4 514 037 A1

FIG. 11

# FIG. 12

UE

NG-RAN

AMF

LMF

5GC LCS Entities

1a. Location Service Request

1b. Location Service Request

2. Location Service Request

3a. NG-RAN Procedures

3b. UE Procedures

4. Location Service Response

5a. Location Service Response

5b. Location Service Response

# FIG. 13

EP 4 514 037 A1

# FIG. 14

| NRPPa | | | NRPPa |
|---|---|---|---|

NG RAN     NG-C     AMF     NLs     LMF

# FIG. 15

# FIG. 16

# FIG. 17

EP 4 514 037 A1

| target UE | first server UE | second server UE | third server UE |

reference signal

compute(obtain)
location (estimate)
information

reference signal

information representing that a PRS retransmission is/is not required (O/X)

# FIG. 18

```
  ┌──────────────┐                              ┌──────────────┐
  │   Target UE  │                              │   Server UE  │
  └──────┬───────┘                              └──────┬───────┘
         │                                             │
  ┌──────┴─────────────────────────────────────────────┴──────┐
  │       obtain information related with a SL PRS configuration │ ── S1810
  └──────┬─────────────────────────────────────────────┬──────┘
         │                                             │
         │◄──────────────── first SL PRS ──────────────│ ── S1820
         │                                             │
  ┌──────┴─────────────────┐                            │
  │ Perform a first SL positioning │ ── S1830           │
  └──────┬─────────────────┘                            │
         │                                             │
         │◄──────────────── second SL PRS ─────────────│ ── S1840
         │                                             │
  ┌──────┴─────────────────┐                            │
  │ Perform a second SL positioning │ ── S1850          │
  └──────┬─────────────────┘                            │
         │        Information representing              │
         │───── that SL PRS retransmission is required ──►│ ── S1860
         │                                             │
         │◄──────────────── third SL PRS ──────────────│ ── S1870
         │                                             │
```

EP 4 514 037 A1

# FIG. 19

```
obtain information related
with a SL PRS configuration          S1910

          ↓

receive a first SL PRS               S1920

          ↓

obtain information related to a first location of
the first device, based on the first SL PRS    S1930

          ↓

receive a second SL PRS              S1940

          ↓

transmit, based on the first SL PRS and
the second SL PRS, information representing
whether retransmission of at least one of     S1950
the first SL PRS and the second SL PRS is required
```

# FIG. 20

```
obtain information related
with a SL PRS configuration          S2010

          ↓

transmit a first SL PRS              S2020

          ↓

transmit a second SL PRS             S2030

          ↓

receive, based on the first SL PRS and
the second SL PRS, information representing
whether retransmission of at least one of     S2040
the first SL PRS and the second SL PRS is required
```

# FIG. 21

EP 4 514 037 A1

# FIG. 22

# FIG. 23

1000(102/106, 202/206)

codewords ... 1010 Scrambler — 1020 Modulator — 1030 Layer Mapper — layers — 1040 Precoder — 1050 Resource Mapper — 1060 Signal Generator — antenna ports

1010 Scrambler — 1020 Modulator — 1050 Resource Mapper — 1060 Signal Generator

# FIG. 24

Device (100,200)

| Communication unit (110)<br>(e.g., 5G communication unit) | Control unit (120)<br>(e.g., processor(s)) |
| --- | --- |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 25

# FIG. 26

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

208

EP 4 514 037 A1

## INTERNATIONAL SEARCH REPORT

| International application No. |
| --- |
| **PCT/KR2023/005476** |

| | |
| --- | --- |
| **A.** | **CLASSIFICATION OF SUBJECT MATTER** |

**H04W 72/25**(2023.01)i; **H04L 5/00**(2006.01)i; **H04W 64/00**(2009.01)i; **H04B 17/20**(2015.01)i; **H04W 24/08**(2009.01)i; **H04W 92/18**(2009.01)i

According to International Patent Classification (IPC) or to both national classification and IPC

| | |
| --- | --- |
| **B.** | **FIELDS SEARCHED** |

Minimum documentation searched (classification system followed by classification symbols)

H04W 72/25(2023.01); G01S 5/02(2010.01); H04L 5/00(2006.01); H04W 4/40(2018.01); H04W 64/00(2009.01); H04W 92/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SL PRS configuration, 위치(positioning), 재전송(retransmission), 시퀀스(sequence), 상관도(correlation value), 차이(offset), SL PRS CCH(control channel), 실패(failure), 표준 편차(standard deviation), 성공(success), 자원 요소(resource element), 콤 사이즈(comb size), BW(bandwidth), 전송 전력(transmit power), 측위 참여(positioning participation)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | KR 10-2022-0020815 A (LG ELECTRONICS INC.) 21 February 2022 (2022-02-21) See paragraphs [0157]-[0185]; claim 1; and figure 21. | 1,3-5,7-24 |
| A | | 2,6 |
| Y | KR 10-2022-0005582 A (LG ELECTRONICS INC.) 13 January 2022 (2022-01-13) See paragraphs [0161]-[0172]; and claim 12. | 1,3-5,7-24 |
| A | US 2022-0110088 A1 (QUALCOMM INCORPORATED) 07 April 2022 (2022-04-07) See paragraphs [0025]-[0319]. | 1-24 |
| A | WO 2022-056004 A1 (QUALCOMM INCORPORATED) 17 March 2022 (2022-03-17) See paragraphs [0042]-[0184]. | 1-24 |

☑ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 July 2023** | **27 July 2023** |

| Name and mailing address of the ISA/KR | Authorized officer |
| --- | --- |
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/005476** |

**C.    DOCUMENTS CONSIDERED TO BE RELEVANT**

| Category* | Citation of document, with indication, where appropriate, of the relevant passages | Relevant to claim No. |
| --- | --- | --- |
| A | HUAWEI et al. Updated views on Rel-18 expanded and improved positioning. RP-212154, 3GPP TSG RAN Meeting #93-e, Electronic Meeting. 06 September 2021.<br>See section 2.1. | 1-24 |

Form PCT/ISA/210 (second sheet) (July 2022)

**INTERNATIONAL SEARCH REPORT**
**Information on patent family members**

International application No.

**PCT/KR2023/005476**

| Patent document cited in search report | | | Publication date (day/month/year) | Patent family member(s) | | | Publication date (day/month/year) |
|---|---|---|---|---|---|---|---|
| KR | 10-2022-0020815 | A | 21 February 2022 | US | 2022-0229146 | A1 | 21 July 2022 |
| | | | | WO | 2020-251318 | A1 | 17 December 2020 |
| KR | 10-2022-0005582 | A | 13 January 2022 | US | 2022-0236365 | A1 | 28 July 2022 |
| | | | | WO | 2020-246842 | A1 | 10 December 2020 |
| US | 2022-0110088 | A1 | 07 April 2022 | WO | 2022-076181 | A1 | 14 April 2022 |
| WO | 2022-056004 | A1 | 17 March 2022 | BR | 112023003397 | A2 | 11 April 2023 |
| | | | | KR | 10-2023-0062558 | A | 09 May 2023 |
| | | | | US | 2022-0077990 | A1 | 10 March 2022 |

Form PCT/ISA/210 (patent family annex) (July 2022)